# EUROPÄISCHE PATENTSCHRIFT

(11) **EP 4 466 977 B1**
(45) Veröffentlichungstag und Bekanntmachung des Hinweises auf die Patenterteilung: **25.03.2026**
(21) Anmeldenummer: 24203957.6
(22) Anmeldetag: 22.06.2023
(51) Int. Cl.: A01F 15/07

(54) **BALLENPRESSE FÜR LANDWIRTSCHAFTLICHES ERNTEGUT**
BALER FOR AGRICULTURAL CROP
PRESSE À BALLES POUR RÉCOLTE AGRICOLE

(30) Priorität: 24.06.2022 DE 102022115782
(43) Veröffentlichungstag der Anmeldung: 27.11.2024
(62) Teilanmeldung aus: 23181067.2
(73) Patentinhaber: Maschinenfabrik Bernard Krone GmbH & Co. KG, 48480 Spelle (DE)
(72) Erfinder: Osthues, Christian, 48477 Hörstel (DE); Olthoff, Daniel, 49808 Lingen (DE); Kalverkamp, Felix, 45665 Recklinghausen (DE)
(74) Vertreter: Weeg, Thomas

(56) Entgegenhaltungen:
- EP-A1- 3 143 867
- EP-B1- 0 893 053
- US-A1- 2003 024 407
- US-B2- 8 261 512

## Beschreibung

Die Erfindung betrifft ein Verfahren zum Betrieb einer Rundballenpresse für landwirtschaftliches Erntegut, die eine Presskammer zum Pressen eines Rundballens ausbildet, eine Wickeleinrichtung zur Umwicklung des gepressten Rundballens mit einem Hüllmaterial aufweist und eine Überführungseinrichtung aufweist, die zur Ausbildung einer Überführungsstrecke, über die der gepresste Rundballen in eine Überführungsrichtung von der Presskammer zur Wickeleinrichtung überführbar ist, eingerichtet ist, und zumindest eine Überführungsstreckenvorrichtung umfasst, die zumindest in einer ersten Stellung zumindest einen überwiegenden ersten Teil der Überführungsstrecke ausbildet.

Eine Rundballenpresse ist etwa aus der DE 602 24 751 T2 bekannt. Die offenbarte Rundballenpresse weist als Überführungsstreckenvorrichtung zwei Rampen zur Überführung des gepressten Rundballens von der Presskammer zur Wickeleinrichtung auf. Als problematisch hat sich bei gattungsgemäßen Rundballenpressen erwiesen, dass während ihres Betriebes an Hängen die gepressten Rundballen nicht zuverlässig von der Presskammer zur Wickeleinrichtung überführt werden können. Insbesondere stellt sich das Problem, dass Rundballen bei einer Abwärtsfahrt in der Presskammer oder auf der Überführungsstrecke verbleiben und nicht ohne manuelles Eingreifen, wozu der Betrieb zu unterbrechen ist, zur Wickeleinrichtung zu überführen sind. Bei einer Aufwärtsfahrt stellt sich dagegen das Problem, das Rundballen auf der Überführungsstrecke derart beschleunigen, dass sie über die Wickeleinrichtung hinaus überführt werden.

Aus der Schrift US 2003/0024407 A1 ist ein Verfahren zum Betrieb einer Rundballenpresse zur Überführung eines gepressten Rundballens von einer Presskammer, die durch ein Klappenelement zur Überführungseinrichtung hin zu öffnen ist, in eine Wickeleinrichtung, die einen von einer Wickelstellung in eine Aufnahmestellung auf die Überführungsstrecke zu beweglichen und eine Wickelmulde für den gepressten Rundballen ausbildenden Wickeltisch aufweist. Der Wickeltisch wird zum Bremsen des gepressten Rundballens in eine Ballenbremsstellung bewegt und in der Ballenbremsstellung gehalten. Anschließend öffnet das Klappenelement die Presskammer zur Ausgabe des gepressten Rundballens aus der Presskammer zur Überführungseinrichtung hin. Anschließend wird der Wickeltisch zur Umwicklung des aufgenommenen Rundballens in die Wickelstellung bewegt. Der gewickelte Rundballen wird von einer ersten Abrolleinrichtung aufgefangen, die sich hinter und unterhalb der Abgabeöffnung der Presskammer der Rundballenpresse befindet. An die erste Abrolleinrichtung schließt sich eine zweite Abrolleinrichtung an, die bei der Annahme eines Rundballens dicht am Boden gehalten wird. Zudem muss der Wickeltisch zur Annahme eines Rundballens zunächst in eine vertikale Stellung verschwenkt werden, um den Rundballen abzubremsen, um danach zusammen mit der zweiten Abrolleinrichtung um etwa 90° gedreht zu werden, bevor der Wickelvorgang gestartet werden kann.

Aus der Schrift EP 3 143 867 A1 ist ebenfalls eine Rundballenpresse mit Wickeleinrichtung bekannt. Der dort offenbarte Wickeltisch ist zwischen der Aufnahmestation und der Wickelstation verfahrbar, um einen fertig gebundenen Erntegutballen aufzunehmen und anschließend mit Silagefolie zu umwickeln. Das Verfahren des Wickeltisches über längere Entfernungen ist aufwendig, zudem ist es schwierig, einen fertig gebundenen Rundballen unter allen Einsatzbedingungen, insbesondere bei Arbeiten am Hang, sicher aufzunehmen und abzubremsen.

Die Schrift EP 0 893 053 B1 offenbart auch eine Rundballenpresse mit Wickeleinrichtung. Der Wickeltisch ist an Führungsschienen entlang verfahrbar, um einen Rundballen aufzunehmen und zur Wickeleinrichtung zu transportieren. Am hinteren Ende des Wickeltisches ist eine Ballenbremse angeordnet, die einen dem Wickeltisch zugeförderten Ballen abbremsen soll. Die Ballenbremse selbst ist in ihrer Winkelstellung verstellbar, um zwischen einer Bremsstellung und einer Abwurfstellung zur Abgabe des Ballens vom Wickeltisch hin und her verstellbar zu sein.

Aufgabe der vorliegenden Erfindung ist die Bereitstellung eines Verfahrens zum Betrieb der Rundballenpresse derart, dass die Zuverlässigkeit der Überführung des gepressten Rundballens erhöht ist.

Die Erfindung wird gelöst durch die kennzeichnenden Merkmale des Anspruchs 1.

Gemäß dem Verfahren wird der Wickeltisch zum Bremsen des gepressten Rundballens zunächst in eine Ballenbremsstellung bewegt und/oder in der Ballenbremsstellung gehalten. Die Ballenbremsstellung gleicht der Wickelstellung oder ist derart definiert, dass der Wickeltisch in der Ballenbremsstellung zwischen der Wickelstellung und der Aufnahmestellung angeordnet ist. Während der Wickeltisch in der Ballenbremsstellung angeordnet wird oder verbleibt, wird das Klappenelement der Presskammer zur Ausgabe des Rundballens aus der Presskammer zur Überführungseinrichtung hin geöffnet. Daraufhin wird der Rundballen in der Praxis insoweit mittels der Überführungseinrichtung überführt, bis er an einen vorderen Teil des Wickeltisches, insbesondere das Bremsrollenelement, anstößt. Anschließend wird der Wickeltisch zur Aufnahme des gepressten Rundballens insbesondere an ihm entlang in die Aufnahmestellung bewegt. Daraufhin wird der Rundballen schwerkraftbedingt oder mithilfe des Überführungsantriebselementes auf den Wickeltisch übergeben. Anschließend wird der Wickeltisch zur Umwicklung des Rundballens in die Wickelstellung bewegt. Durch dieses Verfahren lässt sich im Falle einer hangaufwärtsgerichteten Fahrt vermeiden, dass der Rundballen aufgrund der zur Horizontalen angewinkelten Überführungsrichtung während der Überführung derart schnell wird, dass er über den Wickeltisch hinaus rollt bzw. gleitet, ohne dass dafür signifikante konstruktive Änderungen an der bekannten Rundballenpresse notwendig sind.

Bevorzugt erfolgt die Bewegung des Wickeltisches in die Aufnahmestellung nach Ablauf einer bestimmten Zeitdauer nach der Öffnung des Klappenelementes und/ oder in Abhängigkeit von einem Ausgangssignal eines Ballenbremssensors zur Feststellung vom an der Wickeleinrichtung, insbesondere an dem Bremsrollenelement, anliegenden Rundballen. Dadurch wird verhindert, dass etwa bei einer langsameren Überführung des Rundballens der Wickeltisch bereits in der Aufnahmestellung angeordnet ist, wenn der Rundballen die Wickeleinrichtung erreicht, und gleichzeitig eine zügige Überführung erreicht.

Bevorzugt wird die Ballenbremsstellung in Abhängigkeit von einer Größe des Rundballens eingestellt. Die Größe wird insbesondere mittels eines Größensensors ermittelt oder einem Steuergerät der Rundballenpresse entnommen. Insbesondere wird die Ballenbremsstellung derart eingestellt, dass der Abstand des Wickeltisches von der Überführungseinrichtung bzw. von der Aufstandsebene in der Ballenbremsstellung mit der Größe des Rundballens wächst. Dadurch lässt sich sowohl eine mangelnde Bremswirkung für große Ballen als auch ein Verklemmen kleiner Ballen zwischen der Überführungseinrichtung und der Wickeleinrichtung verhindern.

Vorzugsweise hängt der Ablauf des Verfahrens vom Ausgangssignal eines Ballenaufnahmesensors zur Identifikation eines in der Wickelmulde angeordneten Rundballens ab. Insbesondere erfolgt die Bewegung des Wickeltisches in die Wickelstellung erst auf die Identifikation hin. Bevorzugt wird das Überführungsantriebselement in die Antreibestellung überführt, wenn der Wickeltisch in der Aufnahmestellung angeordnet ist und/oder der Rundballen noch nicht identifiziert ist. Besonders bevorzugt wird das Überführungsantriebselement auf die Identifikation hin in die Ruhestellung zurückgeführt. Dadurch werden unnötige Verzögerungen in Betrieb der Rundballenpresse vermieden.

Vorzugsweise ist die Bewegung des Wickeltisches von einer Neigung der Rundballenpresse abhängig. Insbesondere wird die Zeitdauer und/oder die Ballenbremsstellung in Abhängigkeit von der Neigung bestimmt bzw. eingestellt. Auch weitere Verfahrensparameter können zur Verbesserung des Verfahrens von der Neigung abhängig gemacht werden. Dadurch lässt sich die Bremswirkung für jede Lage optimieren. Insbesondere weist die Rundballenpresse selbst einen Neigungssensor zur Ermittlung der Neigung auf oder erlangt die Neigung repräsentierende Daten von der Zugmaschine. Mit der Neigung ist insbesondere eine Neigung um eine Horizontale und zur Überführungsrichtung rechtwinklige Neigungsachse gemeint.

Die gattungsgemäße oder erfindungsgemäße Rundballenpresse weist bevorzugt eine Steuervorrichtung auf, die zur automatischen Ausführung des vorbeschriebenen Verfahrens eingerichtet ist. Die Steuervorrichtung ist dazu insbesondere mit den genannten Sensoren gekoppelt und zur Steuerung des Stellelementes und/oder eines Wickeleinrichtungsstellelementes zur Bewegung des Wickeltisches ausgebildet. Dadurch lassen sich die vorbeschriebenen Vorteile des Verfahrens automatisiert und damit bei nur sehr geringer Fehleranfälligkeit erreichen.

Bei der Rundballenpresse handelt es sich in der Regel um eine im Betrieb von einer Zugmaschine in eine Fahrtrichtung über eine landwirtschaftliche Fläche gezogene mobile landwirtschaftliche Maschine, die zur Aufnahme von Heu und/oder Gras als Erntegut und zur Ausbildung eines zylindrischen und umhüllten Rundballens daraus ausgebildet ist. Die Rundballenpresse kann aber auch als selbstfahrende landwirtschaftliche Maschine ausgebildet sein. Die Rundballenpresse weist ein Fahrwerk mit zumindest zwei Rädern auf. Die Aufstandsebene ist eine virtuelle Ebene, die die Räder berührt, die Rundballenpresse nicht schneidet und sich in die Fahrtrichtung erstreckt. Bei einem Betrieb der Rundballenpresse auf einer horizontalen landwirtschaftlichen Fläche erstreckt sich die Aufstandsebene horizontal.

Die Überführungseinrichtung ist insbesondere derart ausgebildet, dass der gepresste Rundballen zumindest bei horizontaler Anordnung der Aufstandsebene über die Überführungsstrecke von der Presskammer zur Wickeleinrichtung rollen oder gleiten kann, ohne dass währenddessen eine Krafteinwirkung in die Überführungsrichtung auf den Rundballen notwendig ist. Die Überführungsstrecke ist bevorzugt derart ausgebildet, dass der Rundballen während der Überführung keine wesentliche Richtungsänderung erfährt. Die Überführungsstrecke erstreckt sich vorzugsweise zumindest teilweise geneigt zur Aufstandsebene. Die Überführungsstrecke wird insbesondere durch eine Mehrzahl von Elementen der Überführungseinrichtung oder ihren von der Aufstandsebene abgewandten Überführungsoberflächen ausgebildet, die in die Überführungsrichtung derart geringfügig voneinander beabstandet sind, dass Rundballen üblicher Größe in einer fließenden Bewegung über sie hinweg zu überführen sind.

Die Überführungsstreckenvorrichtung ist zwischen der Presskammer und der Wickeleinrichtung angeordnet und weist bevorzugt zumindest einen Teil der Elemente und/oder der Überführungsoberflächen auf. In der ersten Stellung bildet die Überführungsstreckenvorrichtung insbesondere insofern einen überwiegenden Teil der Überführungsstrecke aus, als der von der Überführungsstreckenvorrichtung ausgebildete Teil der Überführungsstrecke zumindest die Hälfte der in die Überführungsrichtung gemessenen Länge der gesamten Überführungsstrecke ausmacht. Der erste Teil der Überführungsstrecke ist bevorzugt zusammenhängend und umfasst vorzugsweise, je nach Stellung des Überführungsantriebselementes, ein an die Presskammer und/oder die Wickeleinrichtung angrenzendes Ende der Überführungsstrecke.

Die Präposition "zwischen" ist insbesondere derart zu verstehen, dass eine zur Aufstandsebene rechtwinklige, virtuelle Gerade sowohl die Überführungsstreckenvorrichtung als auch das Überführungsantriebselement schneidet. Das Überführungsantriebselement ist in der Antreibestellung oberhalb der Überführungsstreckenvorrichtung und insbesondere oberhalb des ersten Teils der Überführungsstrecke angeordnet. Bevorzugt ist das Überführungsantriebselement sowohl relativ zur Überführungsstreckenvorrichtung als auch relativ zu einem Maschinenrahmen der Rundballenpresse beweglich. Durch die Beweglichkeit des Überführungsantriebselementes zumindest anteilig in die Überführungsrichtung ist ein Anschieben des gepressten Rundballens, der während der Überführung ebenso oberhalb des ersten Teils angeordnet ist, in die Überführungsrichtung ermöglicht. Durch das Überführungsantriebselement ist eine zuverlässige Überführung des gepressten Rundballens zur Wickeleinrichtung auch bei einer steilen Abwärtsfahrt zu erreichen.

Das Überführungsantriebselement ist insbesondere als drehbare Rolle ausgebildet, deren Drehachse sich quer zur Überführungsrichtung erstreckt und relativ zur Überführungsstreckenvorrichtung beweglich ist. Die vor- und nachgenannten Stellungen werden insbesondere einzig durch die Position der Drehachse und nicht durch eine Drehstellung des Überführungsantriebselementes definiert. Durch die Drehbarkeit des Überführungsantriebselementes wird ein Einfluss auf eine etwaige Rotation des überführten Rundballens und damit seine Bremsung vermieden. In der Antreibestellung ist das Überführungsantriebselement insbesondere derart weit von der Überführungsstreckenvorrichtung beabstandet, dass die im Betrieb auf einen Rundballen üblicher Größe übertragene Kraft zumindest phasenweise zumindest im Wesentlichen in die Überführungsrichtung gerichtet ist.

Vorzugsweise ist das Überführungsantriebselement aus der Antreibestellung relativ zum Überführungsstreckenelement insbesondere auf den ersten Teil zu und/oder zum Maschinenrahmen zumindest in eine Aufnahmestützstellung beweglich gelagert, in der das Überführungsantriebselement einen zweiten Teil der Überführungsstrecke ausbildet. Durch diese Lagerung des Überführungsantriebselementes kann es auch ohne, vor oder nach der Notwendigkeit zum Antreiben des Rundballens zur Überführung des Rundballens beitragen, indem es die Überführungsstrecke optimiert.

Bevorzugt ist das Überführungsantriebselement derart gelagert, dass der zweite Teil der Überführungsstrecke zwischen der Presskammer und dem ersten Teil der Überführungsstrecke angeordnet ist. Besonders bevorzugt bildet das Überführungsantriebselement in der Aufnahmestützstellung das an die Presskammer angrenzende Ende der Überführungsstrecke aus. Durch diese Anordnung des zweiten Teils ist das Überführungsantriebselement während der Überführung desselben Rundballens zunächst zur Stützung des Rundballens und anschließend zu seinem Antreiben über die restliche Überführungsstrecke nutzbar und so die Wirksamkeit des Überführungsantriebselementes maximiert.

Über das Überführungsantriebselement hinaus weist die Rundballenpresse bevorzugt ein Klappenelement auf, das in einer Pressstellung die Presskammer mit ausbildet und das zur Öffnung der Presskammer zumindest anteilig zur Überführungseinrichtung hin beweglich ist. Das Klappenelement ist nicht Teil der Überführungseinrichtung. Vorzugsweise erstreckt sich das Überführungsantriebselement in der Aufnahmestützstellung in einem zur Presskammer ortsfesten Raumabschnitt, und/ oder Flächenabschnitt eines Längsschnittes, in den sich das Klappenelement in der Pressstellung erstreckt. Das Überführungsantriebselement kann also nicht in der Abstützstellung angeordnet sein, während das Klappenelement (noch) in der Pressstellung angeordnet ist. Bei dem Raumabschnitt handelt es sich um einen Raum, dessen Grenzen fiktiv sind, und der in der Aufnahmestützstellung von dem Überführungsantriebselement beansprucht wird. Im Falle einer Ausbildung des Überführungsantriebselementes als Rolle ist der Raumabschnitt insbesondere zylinderförmig. Bei einem konventionell ausgebildeten Klappenelement lässt sich durch diese Definition der Aufnahmestützstellung die Überführungsstrecke derart ausbilden, dass ein fließender Übergang für den gepressten Rundballen aus der Presskammer auf die Überführungsstrecke möglich ist und eine bestmögliche Umwandlung der Lageenergie des Rundballens in der Presskammer in Bewegungsenergie während der Überführung ermöglicht ist. Insbesondere wird eine Bewegung des Rundballens entgegen der Überführungsrichtung gegen eine Starterwalze verhindert, die die Presskammer mit ausbildet.

Besonders bevorzugt ist das Überführungsantriebselement über die Aufnahmestützstellung hinaus in eine Ruhestellung beweglich. In der Ruhestellung ist das Überführungsantriebselement insbesondere unterhalb des Klappenelementes anzuordnen. Von hier aus ist es nach der Öffnung des Klappenelementes bei einer konventionellen Ausbildung dessen besonders schnell in die Aufnahmestützstellung zu bewegen. Die Bewegung erfolgt im Betrieb insbesondere automatisiert in Abhängigkeit von einer Stellung des Klappenelementes.

Alternativ zu den Merkmalen des kennzeichnenden Teils des Anspruchs 1 wird die Aufgabe auch durch ein Überführungsantriebselement gelöst, das in die Ruhestellung und in die Aufnahmestützstellung und nicht notwendigerweise in die Antreibestellung beweglich gelagert ist.

Vorzugsweise ist das Überführungsantriebselement zumindest anteilig schwenkbeweglich um eine Antriebsschwenkachse gelagert, zu der die Drehachse insbesondere einen unveränderlichen Abstand hat. Die Antriebsschwenkachse ist vorzugsweise rechtwinklig zur Überführungsrichtung angeordnet. Durch diese Lagerung wird das Ausfallrisiko der Überführungseinrichtung gering gehalten. Die Antriebsschwenkachse ist bevorzugt ortsfest zum Maschinenrahmen und/oder zur Überführungsstreckenvorrichtung in der ersten Stellung angeordnet.

Besonders bevorzugt ist die Antriebsschwenkachse in einem Zwischenraum zwischen der Aufstandsebene und einer Referenzebene angeordnet, in dem auch die Überführungsstreckenvorrichtung in der ersten Stellung angeordnet ist. Die Referenzebene grenzt dabei an die Überführungsstreckenvorrichtung an. Insbesondere ist die Antriebsschwenkachse zwischen zumindest einem Teil der Überführungsstrecke oder der Überführungsstreckenvorrichtung und der Aufstandsebene angeordnet. Durch diese Anordnung der Antriebsschwenkachse lässt sich das Überführungsantriebselement bereits mit einem kleinen Schwenkwinkel von der Aufnahmestützstellung in die Antreibestellung bewegen.

Vorzugsweise ist das Überführungsantriebselement in eine Abgabestützstellung beweglich gelagert. In der Abgabestützstellung bildet eine Überführungsantriebsvorrichtung, die das Überführungsantriebselement umfasst und insbesondere insgesamt um die Antriebsschwenkachse schwenkbeweglich ist, einen weiteren Teil der Überführungsstrecke aus. Der weitere Teil der Überführungsstrecke ist zwischen dem von der Überführungsstreckenvorrichtung ausgebildeten ersten Teil der Überführungsstrecke und der Wickeleinrichtung angeordnet. Insbesondere ist das Überführungsantriebselement aus der Aufnahmestützstellung über die Antreibestellung hinaus in die Abgabestützstellung schwenkbeweglich. In der Abgabestützstellung bildet das Überführungsantriebselement selbst oder ein weiteres Teil der Überführungsantriebsvorrichtung den weiteren Teil der Überführungsstrecke aus. Der weitere Teil der Überführungsstrecke wird insbesondere alternativ zum zweiten Teil der Überführungsstrecke ausgebildet.

Das Überführungsantriebselement ist insbesondere derart von der Überführungsantriebsvorrichtung umfasst, als es über seine optionale Drehbarkeit um die Drehachse hinaus nur gemeinsam mit den weiteren Teilen der Überführungsantriebsvorrichtung beweglich ist. Mit der Beweglichkeit des Überführungsantriebselementes in die Abgabestützstellung und dem dadurch zu erreichenden, weiteren Teil der Überführungsstrecke kommt dem Überführungsantriebselement eine weitere die Überführung von Rundballen unterstützende Funktion zu. Vorteil der Abgabestützstellung ist insbesondere, dass in ihr auch ein Rundballen, der zuvor zwischen dem Überführungsantriebselement in der Antreibestellung und der Presskammer auf der Überführungsstrecke angeordnet war und für den das Überführungsantriebselement ein Hindernis darstellte, noch zur Wickeleinrichtung überführt werden kann.

Bevorzugt weist die Überführungseinrichtung zumindest eine Stelleinrichtung mit einem Stellelement zur Bewegung des Antriebselementes zumindest in die Antreibestellung auf. Bevorzugt dient die Stelleinrichtung zur Bewegung des Überführungsantriebselementes in sämtliche seiner Stellungen. Dafür ist es weiterhin bevorzugt, dass eine Bewegung des Überführungsantriebselementes nicht ohne eine Bewegung der Stelleinrichtung möglich ist. Als Stellelement ist insbesondere ein Linearaktor, bevorzugt ein hydraulischer, pneumatischer oder elektrischer Linearaktor, vorgesehen. Durch die Stelleinrichtung ist in jeder Betriebssituation eine bedarfsgerechte Bewegung des Überführungsantriebselementes ermöglicht.

Besonders bevorzugt ist die Stelleinrichtung zu einer Verschwenkung des Überführungsantriebselementes um zumindest 15°, bevorzugt um zumindest 120°, besonders bevorzugt um zumindest 160° ausgebildet. Dieser Winkel wird insbesondere mit einer Bewegung aus der Ruhestellung in die Abgabestützstellung überstrichen. Diese Ausbildung der Stelleinrichtung erlaubt die Erreichung sämtlicher hilfreicher Stellungen auch bei einer kompakten Anordnung der Antriebsschwenkachse unmittelbar unterhalb der Überführungsstrecke.

Das Stellelement ist zumindest in einer der Stellungen des Überführungsantriebselementes und in der ersten Stellung der Überführungsstreckenvorrichtung zumindest teilweise zwischen der Überführungsstreckenvorrichtung und der Aufstandsebene angeordnet. Eine Stellrichtung, in die das Stellelement zumindest teilweise beweglich ist, ist insbesondere um weniger als 45° zur Aufstandsebene angewinkelt. Die Präposition "zwischen" ist insbesondere derart zu verstehen, dass eine zur Aufstandsebene rechtwinklige, virtuelle Gerade sowohl die Überführungsstreckenvorrichtung als auch das Stellelement schneidet. Durch diese Anordnung des Stellelementes lässt es sich effektiv vor dem Rundballen, etwaigen Erntegutbestandteilen sowie Fremdkörpern und damit vor Ausfällen schützen.

Die Stelleinrichtung umfasst bevorzugt eine das Stellelement mit dem Überführungsantriebselement koppelnde Lenkeranordnung. Die Lenkeranordnung umfasst einen ersten Lenker, der schwenkbeweglich am Stellelement und schwenkbeweglich an dem Maschinenrahmen der Rundballenpresse gelagert ist. Ferner umfasst die Lenkeranordnung einen zweiten Lenker, der schwenkbeweglich am ersten Lenker und schwenkbeweglich am Überführungsantriebselement gelagert ist. Bevorzugt sind sämtliche Schwenkachsen parallel zur Antriebsschwenkachse angeordnet. Besonders bevorzugt entspricht die Achse, um die der zweite Lenker schwenkbeweglich am ersten Lenker angeordnet ist, der Achse, um die der erste Lenker schwenkbeweglich am Stellelement angeordnet ist. Durch die Lenkeranordnung lässt sich eine weitreichende Schwenkbewegung des Überführungsantriebselementes bei einem nur kurzen notwendigen Verfahrweg und damit Bauraum des Stellelementes erreichen.

Die Überführungsstreckenvorrichtung weist vorzugsweise zumindest eine Überführungsstreckenvorrichtungseinheit auf. Bevorzugt ist die Überführungsstreckenvorrichtungseinheit aus einer ersten Stellung, in der sie sich bei Anordnung der Überführungsstreckenvorrichtung in ihrer ersten Stellung angeordnet ist, relativ zu dem Maschinenrahmen der Rundballenpresse um eine Streckenschwenkachse in eine zweite Stellung schwenkbeweglich gelagert. Besonders bevorzugt ist die Überführungsstreckenvorrichtungseinheit in der zweiten Stellung angeordnet, wenn die Überführungsstreckenvorrichtung auch in einer zweiten Stellung angeordnet ist. In der zweiten Stellung kann die Überführungsstreckenvorrichtungseinheit die Überführungsstrecke mit ausbilden. Die Schwenkrichtung der Überführungsstreckenvorrichtungseinheit aus der ersten Stellung in die zweite Stellung entspricht bevorzugt der Schwenkrichtung des Überführungsantriebselementes von der Aufnahmestützstellung in die Antreibestellung. Die Streckenschwenkachse ist insbesondere beabstandet von der Antriebsschwenkachse angeordnet. Die Streckenschwenkachse schneidet die Überführungsstreckenvorrichtungseinheit insbesondere in ihrem der Wickeleinrichtung zumindest in der ersten Stellung zugewandten Endbereich. Die Überführungsstreckenvorrichtung kann zudem einen Abschnitt aufweisen, der die Überführungsstrecke mit ausbildet, und zumindest teilweise zum Maschinenrahmen ortsfest gelagert ist. Durch die schwenkbewegliche Lagerung der Überführungsstreckenvorrichtungseinheit lässt sich insbesondere ein Gefälle der Überführungsstrecke erhöhen und so die Überführung des Rundballens weiter unterstützen.

Die Stelleinrichtung weist bevorzugt ein Übertragungselement auf, mittels dem sie zu einer Bewegung der Überführungsstreckenvorrichtungseinheit von ihrer ersten in ihre zweite Stellung ausgebildet ist. Das bedeutet, dass die Stelleinrichtung sowohl zur Bewegung des Überführungsantriebselementes oder der Überführungsantriebsvorrichtung als auch zur Bewegung der Überführungsstreckenvorrichtungseinheit ausgebildet ist. Das Übertragungselement ist bevorzugt an dem Stellelement, dem ersten oder dem zweiten Lenker oder der Überführungsantriebsvorrichtung angeordnet. Besonders bevorzugt handelt es sich bei dem Übertragungselement um eine drehbare Rolle, deren Drehachse insbesondere mit der Schwenkachse zusammenfällt, um die der erste Lenker relativ zum Stellelement schwenkbar ist. Durch das Übertragungselement werden die vorgenannten Vorteile der beweglichen Überführungsstreckenvorrichtungseinheit zuverlässig erreicht, ohne dass dafür eine gesonderte Stelleinrichtung nötig ist.

Vorzugsweise ist die Stelleinrichtung derart ausgebildet, dass das Übertragungselement sich während einer Bewegung des Überführungsantriebselementes von der Aufnahmestützstellung in die Abgabestützstellung an ein Übertragungsgegenelement der Überführungsstreckenvorrichtungseinheit anlegt. Besonders bevorzugt legt es sich während einer Bewegung des Überführungsantriebselementes von der Aufnahmestützstellung in die Antreibestellung an das Übertragungsgegenelement an. Insbesondere legt das Übertragungselement sich in einer Kontaktaufnahmestellung des Überführungsantriebselementes an das Übertragungsgegenelement an. Mit der weiteren Verschwenkung des Überführungsantriebselementes bleibt das Übertragungselement mit dem Übertragungsgegenelement in Kontakt.

Bis zur Kontaktaufnahmestellung ist das Überführungsantriebselement aus der Ruhestellung insbesondere unabhängig von der Überführungsstreckenvorrichtungseinheit beweglich. Hierdurch wird sichergestellt, dass das Überführungsantriebselement schon unmittelbar, nachdem der Rundballen es übertreten hat, an ihn anzulegen ist. Bevorzugt weist die Überführungsstreckenvorrichtungseinheit eine von der Streckenschwenkachse beabstandete Abstützoberfläche auf, die derart ausgebildet ist, dass die Überführungsstreckenvorrichtungseinheit zumindest in ihrer ersten Stellung und/oder bei Anordnung des Überführungsantriebselementes in der Aufnahmestützstellung und/oder der Ruhestellung mit der Abstützoberfläche an einem Abstützelement des Maschinenrahmens lösbar anliegt. Die Abstützoberfläche ist insbesondere an einem von der Streckenschwenkachse abgewandten und/oder der Presskammer zugewandten Ende der Überführungsstreckenvorrichtungseinheit angeordnet. Besonders bevorzugt hat die Überführungsstreckenvorrichtungseinheit in der Aufnahmestützstellung des Überführungsantriebselementes keinen Kontakt dazu. Mit der Verschwenkung des Überführungsantriebselementes über die Kontaktaufnahmestellung hinaus wird die Abstützoberfläche insbesondere vom Abstützelement gelöst. Durch die Abstützoberfläche wird eine unnötige Belastung der Stelleinrichtung durch einen auf der Überführungsstreckenvorrichtungseinheit aufliegenden Rundballen vermieden, dessen Schwerkraft stattdessen unmittelbar in den Maschinenrahmen abgeleitet wird.

Vorzugsweise sind/ist das Übertragungselement und/oder das Übertragungsgegenelement derart ausgeformt, dass die Bewegung der Überführungsstreckenvorrichtungseinheit aus ihrer ersten Stellung in ihrer zweiten Stellung endet, während das Überführungsantriebselement von der Aufnahmestützstellung in die Abgabestützstellung, insbesondere in die Antreibestellung, bewegt wird. Die Bewegung endet dann in der zweiten Stellung, wenn sich die Überführungsstreckenvorrichtungseinheit mit einer weiteren Bewegung des Überführungsantriebselementes zurück auf die erste Stellung zubewegt oder in der zweiten Stellung stehen bleibt. Durch diese Ausformung lässt sich zum einen erreichen, dass das Überführungsantriebselement den Rundballen möglichst weitgehend bis zur Wickeleinrichtung antreiben kann, und zum anderen erreichen, dass die Überführungsstreckenvorrichtungseinheit nicht zu weit von der Presskammer beabstandet wird. Dies ist von Vorteil, um zu vermeiden, dass etwaiges insbesondere unbeabsichtigt aus der Presskammer austretendes Erntegut unter einen Teil der Überführungsstreckenvorrichtung, insbesondere in den Bereich der Stelleinrichtung, gelangt und zu längeren Stillstandszeiten führt.

Besonders bevorzugt weist das Übertragungsgegenelement im Längsschnitt eine Übertragungskontur auf, die einen ersten insbesondere gerade verlaufenden Konturabschnitt und einen zum ersten Konturabschnitt angewinkelten, insbesondere gerade verlaufenden, zweiten Konturabschnitt aufweist. Die Konturabschnitte sind insbesondere derart zueinander angewinkelt, dass die Überführungsstreckenvorrichtungseinheit bei Kontakt des Übertragungselementes mit dem ersten Konturabschnitt in die zweite Stellung zu bewegen ist und bei Kontakt der Übertragungseinheit mit dem zweiten Konturabschnitt in der zweiten Stellung verbleibt oder zurückbewegt wird. Die vorstehenden Vorteile lassen sich so mit einfachen Mitteln erreichen. Es versteht sich, dass das Übertragungselement und das Übertragungsgegenelement alternativ vertauscht zueinander angeordnet und/oder ausgebildet sein können.

Vorzugsweise umfasst die Überführungsstreckenvorrichtung zumindest zwei Überführungsstreckenvorrichtungseinheiten. Diese sind von einer zur Aufstandsebene rechtwinkligen und zur Überführungsrichtung parallelen Längsmittelebene, die sich zwischen den beiden Überführungsstreckenvorrichtungseinheiten erstreckt, jeweils beabstandet und insbesondere nebeneinander angeordnet. Insbesondere sind die Überführungsstreckenvorrichtungseinheiten gleichartig oder spiegelsymmetrisch zur Längsmittelebene ausgebildet. Durch die Trennung der beiden Überführungsstreckenvorrichtungseinheiten quer zur Überführungsrichtung wird erreicht, dass der Rundballen während der Überführung zumindest phasenweise nur mit seitlichen Abschnitten seiner Mantelfläche auf der Überführungsstreckenvorrichtung aufliegt. Dies wiederum führt zu einem ruhigeren und damit effizienteren Gleiten oder Rollen des Rundballens zur Wickeleinrichtung.

Die das Überführungsantriebselement umfassende Überführungsantriebsvorrichtung und/oder die zumindest eine Überführungsstreckenvorrichtungseinheit weisen/weist bevorzugt zumindest ein Rahmenelement oder insbesondere zumindest ein drehbar am Rahmenelement gelagertes Rollenelement auf. Insbesondere ist das Überführungsantriebselement als Rollenelement ausgebildet. Durch das Rollenelement wird ein Gleiten des Rundballens in die Überführungsrichtung ermöglicht, bei dem gegenüber einem Rollen die Lageenergie zweckdienlicher in kinetische Energie umgesetzt wird. Ein Abwickeln des Rundballens beim Überführen von der Presskammer zur Wickeleinrichtung kann so in der Regel vermieden werden. Die Überführungsstreckenvorrichtungseinheit weist insbesondere eine Mehrzahl von Rollenelementen auf, die zwischen zwei Rahmenelementen gelagert sind. Alternativ oder zusätzlich zu den Rollenelementen weist die Überführungsstreckenvorrichtungseinheit bevorzugt ein sich in die Überführungsrichtung erstreckendes Gleitblech auf. Das zumindest eine Rahmenelement ist relativ zum Maschinenrahmen bevorzugt ausschließlich schwenkbeweglich und erstreckt sich zur jeweiligen Schwenkachse hauptsächlich zumindest im wesentlich radial. Vorzugsweise ist eine Drehachse, um die das zumindest eine Rollenelement der Überführungsstreckenvorrichtungseinheit relativ zum davon umfassten Rahmenelement drehbar gelagert ist, koaxial mit der Streckenschwenkachse angeordnet.

Bevorzugt ist das zumindest eine Rahmenelement, sind insbesondere zwei Rahmenelemente, der Überführungsantriebsvorrichtung zumindest in der Aufnahmestützstellung des Überführungsantriebselementes in einer Draufsicht zumindest teilweise zwischen den zwei Überführungsstreckenvorrichtungseinheiten angeordnet. In der Draufsicht ist die Betrachtungsrichtung insbesondere rechtwinklig zur Aufstandsebene angeordnet. Bei dieser Anordnung des Rahmenelementes bzw. der Rahmenelemente ist die Überführungsantriebsvorrichtung in der Abgabestützstellung besonders gut zur Ausbildung des weiteren Teils der Überführungsstrecke durch das Rahmenelement bzw. die Rahmenelemente geeignet. Dabei weist die Überführungsantriebsvorrichtung bevorzugt zwei weitere Rahmenelemente auf, zwischen denen in der Draufsicht die Überführungsstreckenvorrichtungseinheiten angeordnet sind. Die Rahmenelemente der Überführungsantriebsvorrichtung sind insbesondere in eine Querrichtung versetzt und ortsfest an einem Querträger der Überführungsantriebsvorrichtung angeordnet. An dem Querträger ist bevorzugt zumindest ein Kurbelelement ortsfest angeordnet, das mit der Lenkeranordnung verbunden ist und in die Querrichtung versetzt zu den Rahmenelementen angeordnet ist. Insbesondere weist die Überführungseinrichtung eine Stelleinrichtung pro Überführungsstreckenvorrichtungseinheit auf.

Besonders bevorzugt erstreckt sich ein von der Antriebsschwenkachse beabstandetes Teilstück des Rahmenelementes der Überführungsantriebsvorrichtung länglich in eine Teilstückrichtung, die in der Abgabestützstellung des Überführungsantriebselementes weniger stark zu der Aufstandsebene angewinkelt ist als eine auf die Antriebsschwenkachse bezogene und das Teilstück schneidende Radiale. Die Radiale und die Teilstückrichtung sind bevorzugt um mindestens 10°, insbesondere um mindestens 20° zueinander angewinkelt. Insgesamt weist das Rahmenelement besonders bevorzugt zumindest zwei zueinander angewinkelte Teilstücke auf oder ist S-förmig ausgebildet. Das Teilstück reicht bevorzugt bis zum Überführungsantriebselement. Durch diese Ausbildung des Teilstückes ist es zur Ausbildung des weiteren Teils der Überführungsstrecke geeignet, ohne dass der Rundballen beim Übertritt vom ersten Teil der Überführungsstrecke auf den weiteren Teil der Überführungsstrecke signifikant umgelenkt werden muss.

Ein von der Streckenschwenkachse abgewandtes Ende der Überführungsstreckenvorrichtungseinheit ist bevorzugt von einem Auffangelement ausgebildet, das zumindest in der ersten Stellung der Überführungsstreckenvorrichtung und bei Anordnung des Überführungsantriebselementes in der Aufnahmestützstellung zwischen dem Überführungsantriebselement und der Aufstandsebene angeordnet ist. Das gilt insbesondere auch, wenn das Überführungsantriebselement in der Ruhestellung angeordnet ist. Das Auffangelement ist bevorzugt ortsfest oder einteilig mit dem Rahmenelement der Überführungsstreckenvorrichtungseinheit ausgebildet. Durch das Auffangelement wird insbesondere in der zweiten Stellung der Überführungsstreckenvorrichtungseinheit sichergestellt, dass kein zu großer Spalt zwischen der Überführungsstreckenvorrichtung und der Presskammer entsteht, durch den größere Mengen von Erntegut hindurchtreten könnten.

Das Auffangelement erstreckt sich insbesondere flächig zwischen zwei Rahmenelementen der Überführungsstreckenvorrichtungseinheit. Eine von der Aufstandsebene abgewandte Auffangfläche erstreckt sich im Längsschnitt bevorzugt angewinkelt zu einer auf die Streckenschwenkachse bezogenen Radialen, die die Auffangfläche schneidet, und/oder zur Überführungsrichtung. Insbesondere erstreckt sich die Auffangfläche in der zweiten Stellung der Überführungsstreckenvorrichtungseinheit im Längsschnitt in Richtung der Starterwalze. Vorzugsweise ist die Abstützoberfläche zumindest in der ersten Stellung der Überführungsstreckenvorrichtungseinheit zwischen der Auffangfläche und der Aufstandsebene angeordnet.

Die Überführungsantriebsvorrichtung weist in der Draufsicht bevorzugt zumindest ein Trittelement zwischen den Überführungsstreckenvorrichtungseinheiten auf. Das Trittelement weist bevorzugt zwei zueinander im Längsschnitt angewinkelte Trittflächen auf, wobei sich besonders bevorzugt eine erste Trittfläche zumindest in der Ruhestellung des Überführungsantriebselementes zumindest im Wesentlichen parallel zur Aufstandsebene erstreckt und sich eine zweite Trittfläche zumindest in der Abgabestützstellung des Überführungsantriebselementes zumindest im Wesentlichen parallel zur Aufstandsebene erstreckt. Die Trittfläche ist besonders bevorzugt durch eine konturiertes oder glattes Blech oder durch ein Rost ausgebildet.

Vorzugsweise umfasst die Wickeleinrichtung einen Wickeltisch, der eine Wickelmulde für den gepressten Rundballen ausbildet. Der Wickeltisch weist vorzugsweise einen Wickeltischrahmen und zumindest ein im Betrieb relativ zum Wickeltischrahmen umlaufendes Rotationselement zur Rotation des Rundballens auf. Bei dem Rotationselement handelt es sich insbesondere um einen umlaufenden Gurt. Der Wickeltisch ist relativ zum Maschinenrahmen insbesondere zumindest im Wesentlichen translatorisch beweglich. Der Wickeltisch ist relativ zum Maschinenrahmen bevorzugt von einer Wickelstellung in eine Aufnahmestellung auf die Überführungsstrecke zu beweglich. In der Wickelstellung, in der der Wickeltischrahmen ortsfest zum Maschinenrahmen angeordnet ist, ist der Wickeltisch während der Umwicklung des gepressten Rundballens mit dem Hüllmaterial angeordnet. In der Aufnahmestellung befindet sich der Wickeltisch, während der Rundballen von der Überführungseinrichtung auf den Wickeltisch aufgegeben wird. Bei der Aufnahmestellung handelt es sich insbesondere um eine Endstellung, über die der Wickeltisch ausgehend von der Wickelstellung nicht hinaus beweglich ist. In der Aufnahmestellung ist der Wickeltisch bevorzugt näher zur Aufstandsebene und/oder näher zur Überführungseinrichtung angeordnet als in der Wickelstellung. Besonders bevorzugt ist der Wickeltisch aus der Aufnahmestellung über die Wickelstellung hinaus in eine Ausgabestellung zur Ausgabe des gepressten und umwickelten Rundballens aus der Rundballenpresse überführbar ausgebildet.

Vorzugsweise weist die Wickeleinrichtung ein Bremsrollenelement auf, das drehbar um eine zum Wickeltischrahmen ortsfeste Bremsrollendrehachse gelagert ist. Das Bremsrollenelement ist zumindest in der Wickelstellung zwischen der Wickelmulde und der Überführungseinrichtung angeordnet. Bevorzugt steht das Bremsrollenelement in der Wickelstellung entgegen der Überführungsrichtung vom Wickeltisch ab. Das Bremsrollenelement dient dazu, den von der Überführungseinrichtung getragenen und in die Überführungsrichtung bewegten Rundballen abzubremsen, falls der Wickeltisch (noch) nicht in der Aufnahmestellung angeordnet ist.

Besonders bevorzugt ist das Bremsrollenelement derart am Wickeltischrahmen gelagert, dass es in der Aufnahmestellung des Wickeltisches zwischen zumindest einem Teil der Überführungsstreckenvorrichtung und der Aufstandsebene angeordnet ist. Somit behindert es die übliche Übergabe des Rundballens von der Überführungsstrecke in die Wickeleinrichtung nicht. Alternativ ist denkbar, dass das Bremsrollenelement in der Aufnahmestellung die Überführungsstrecke mit ausbildet.

Weitere Einzelheiten und Vorteile der Erfindung sind den nachfolgend beschriebenen, schematisch dargestellten Figuren zu entnehmen; es zeigen:
- Fig. 1: eine Seitenansicht einer erfindungsgemäßen und an eine Zugmaschine gekoppelten Rundballenpresse,
- Fig. 2: einen Längsschnitt eines Teils der erfindungsgemäßen Rundballenpresse mit dem Überführungsantriebselement in einer Ruhestellung I,
- Fig. 3: den Längsschnitt gemäß Fig. 2 ohne Darstellung eines Klappenelementes mit dem Überführungsantriebselement in einer Aufnahmestützstellung II,
- Fig. 4: den Längsschnitt gemäß Fig. 3 mit dem Überführungsantriebselement in einer Kontaktaufnahmestellung III,
- Fig. 5: den Längsschnitt gemäß Fig. 3 mit dem Überführungsantriebselement in einer ersten Antreibestellung IV,
- Fig. 6: den Längsschnitt gemäß Fig. 3 mit dem Überführungsantriebselement in einer zweiten Antreibestellung IV,
- Fig. 7: den Längsschnitt gemäß Fig. 3 mit dem Überführungsantriebselement in einer Abgabestützstellung V,
- Fig. 8: den Längsschnitt gemäß Fig. 7 mit zu einer Wickeleinrichtung überführtem Rundballen,
- Fig. 9: den Längsschnitt gemäß Fig. 3 mit einem Wickeltisch der Wickeleinrichtung in einer Ballenbremsstellung W1,
- Fig. 10: den Längsschnitt gemäß Fig. 3 mit dem Wickeltisch zwischen der Ballenbremsstellung W1 und einer Aufnahmestellung W2,
- Fig. 11: den Längsschnitt gemäß Fig. 3 mit dem Wickeltisch in der Aufnahmestellung W2,
- Fig. 12: den Längsschnitt gemäß Fig. 11 mit zur Wickeleinrichtung überführtem Rundballen,
- Fig. 13: einen vergrößerten teilweisen Längsschnitt der erfindungsgemäßen Rundballenpresse,
- Fig. 14: eine teilweise Draufsicht der erfindungsgemäßen Rundballenpresse,
- Fig. 15: eine perspektivische Darstellung eines Teils der erfindungsgemäßen Rundballenpresse.

Die nachfolgend erläuterten Merkmale der erfindungsgemäßen Ausführungsbeispiele können auch einzeln oder in anderen Kombinationen als dargestellt oder beschrieben Gegenstand der Erfindung sein. Sofern sinnvoll sind funktional gleichwirkende Teil mit identischen Bezugsziffern versehen.

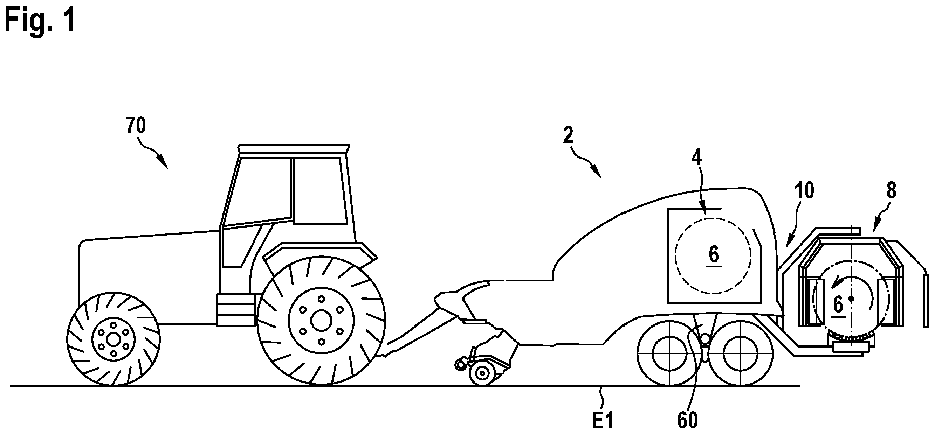

Die erfindungsgemäße Rundballenpresse 2 dient zum Pressen landwirtschaftlichen Erntegutes zu Rundballen 6. Im Betrieb wird die Rundballenpresse 2 von einer Zugmaschine 70 gezogen (Fig. 1). Die Rundballenpresse 2 weist eine Presskammer 4 zum Pressen des Rundballens 6 aus. Außerdem weist die Rundballenpresse 2 eine Wickeleinrichtung 8 zur Umwicklung des gepressten Rundballens 6 mit einem Hüllmaterial auf. Weiterhin weist die Rundballenpresse 2 eine Überführungseinrichtung 10 zwischen der Pressekammer 4 und der Wickeleinrichtung 8 auf.

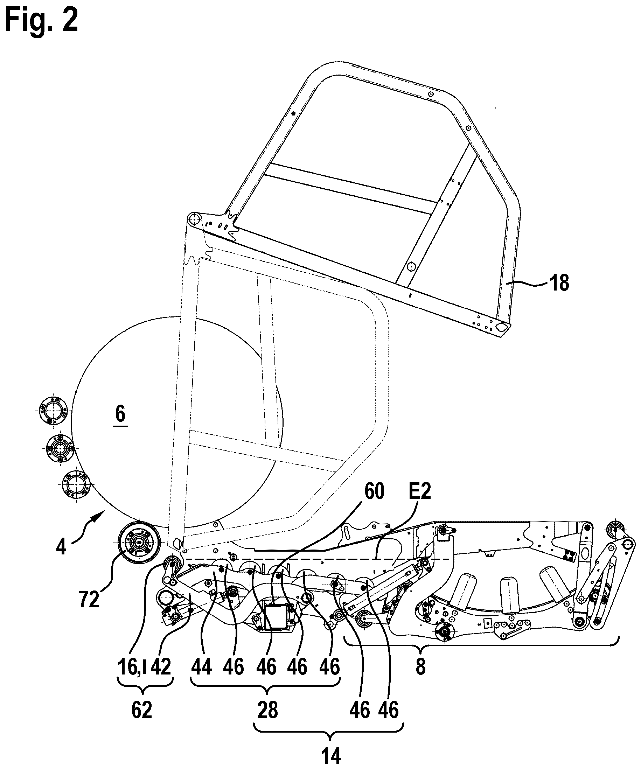

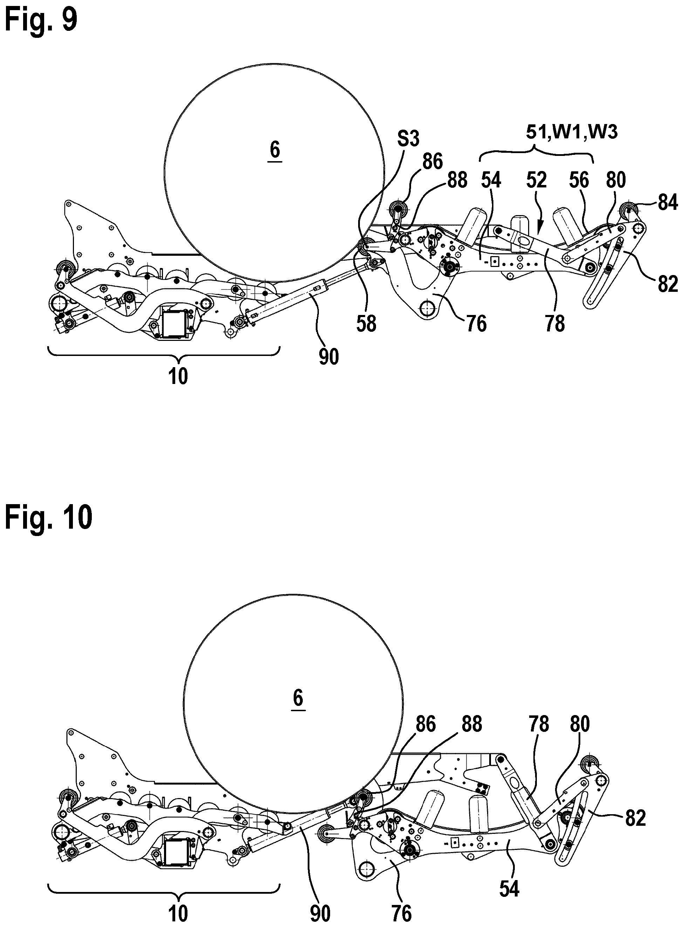

Die Fig. 2 bis 12 zeigen Längsschnitte zumindest der Überführungseinrichtung 10 und der Wickeleinrichtung 8 der Rundballenpresse 2. Die Fig. 2 bis 8 dokumentieren ein erstes, mit der Rundballenpresse 2 durchzuführendes Verfahren zur Überführung des Rundballens 6. Die Fig. 9 bis 12 dokumentieren ein weiteres, mit der Rundballenpresse 2 durchzuführendes Verfahren zur Überführung des Rundballens 6.

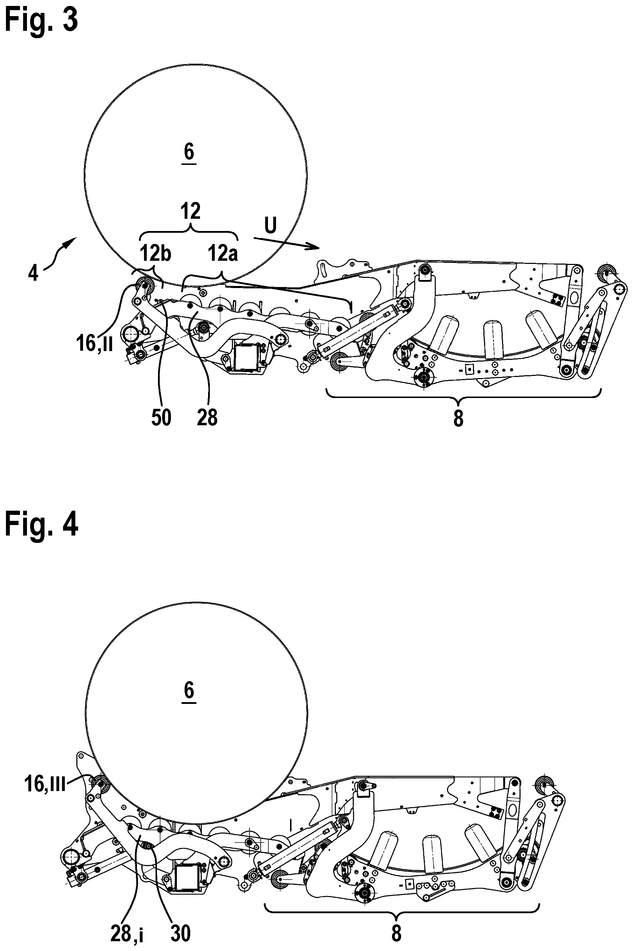

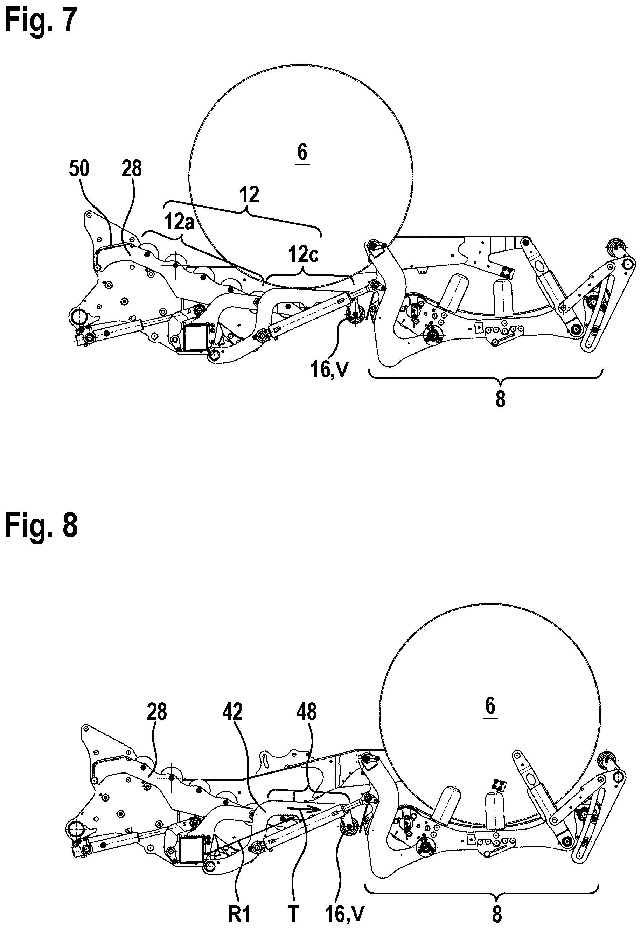

Die Überführungseinrichtung 10 ist zur Ausbildung einer Überführungsstrecke 12 eingerichtet, wovon zumindest ein erster Teil 12a von einer Überführungsstreckenvorrichtung 14 der Überführungseinrichtung 10 ausgebildet wird (Fig. 3 und 7). Über die Überführungsstrecke 12 ist der gepresste Rundballen 6 in eine Überführungsrichtung U von der Presskammer 4 zur Wickeleinrichtung 8 überführbar.

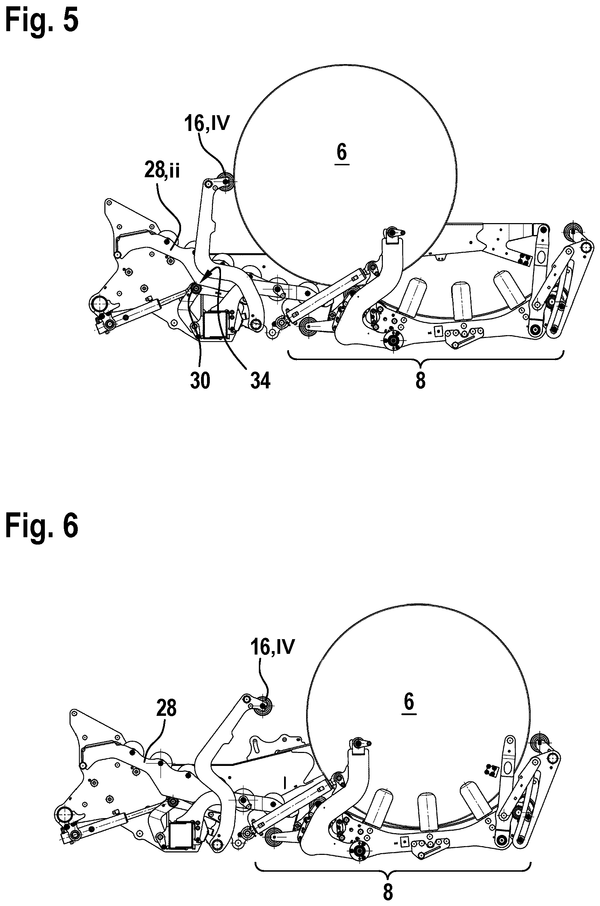

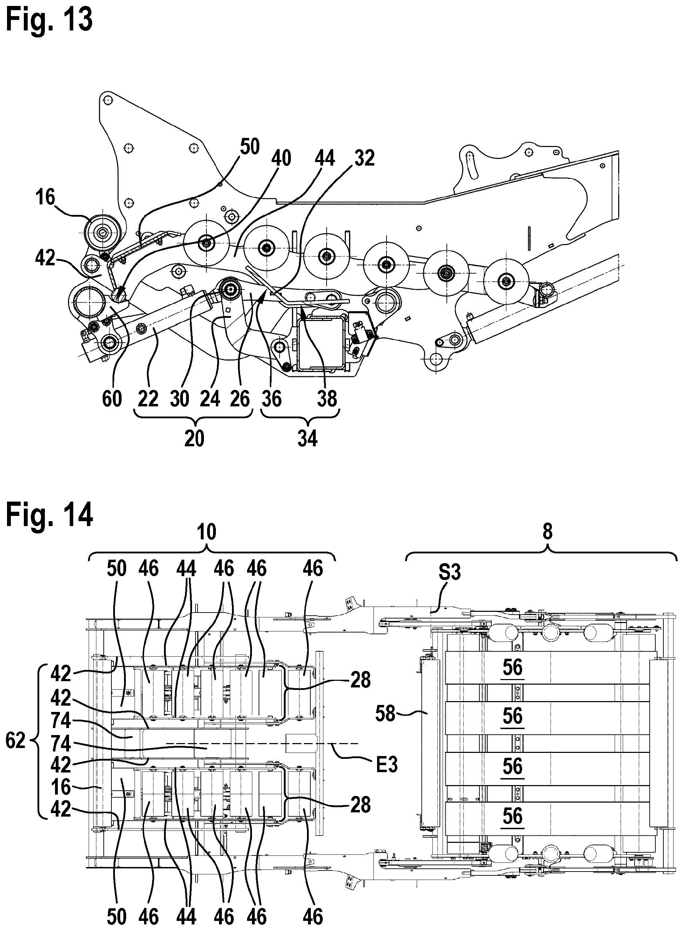

Die Überführungsstreckenvorrichtung 14 weist zwölf Rollenelemente 46 auf, die in zwei Gruppen mit je sechs Rollenelementen 46 angeordnet sind (Fig. 14). Je 4 der Rollenelemente 46 jeder Gruppe sind von einer Überführungsstreckenvorrichtungseinheit 28 umfasst, die außerdem zwei Rahmenelemente 44 umfasst. Die beiden Überführungsstreckenvorrichtungseinheiten 28 sind von einer ersten Stellung i (u.a. Fig. 2) um eine Streckenschwenkachse S2 in eine zweite Stellung ii (u.a. Fig. 5) schwenkbeweglich.

Darüber hinaus weist die Überführungseinrichtung 10 eine Überführungsantriebsvorrichtung 62 auf, die ein Überführungsantriebselement 16 und vier Rahmenelemente 42 umfasst. Die Überführungsantriebsvorrichtung 62 ist schwenkbeweglich um eine Antriebsschwenkachse S1 gelagert. Die Antriebsschwenkachse S1 ist zwischen einer Aufstandsebene E1 (Fig. 1) und einer zur Aufstandsebene E1 parallelen und an die Überführungsstreckenvorrichtung 14 angrenzenden Referenzebene E2 (Fig. 2) angeordnet, wobei die Überführungsstreckenvorrichtung 14 zwischen der Aufstandsebene E1 und der Referenzebene E2 angeordnet ist. Beide Schwenkachsen S1, S2 sind ortsfest zu einem Maschinenrahmen 60 angeordnet.

Fig. 2 zeigt einen gepressten Rundballen 6 in der Presskammer 4. Die Presskammer 4 wird während des Pressens unter anderem von einem Klappenelement 18 in einer gestrichelt dargestellten Pressstellung ausgebildet. Ferner wird sie von einer Starterwalze 72 ausgebildet. Nach Fertigstellung des Rundballens 6 wird das Klappenelement 18 in die dargestellte geöffnete Stellung verschwenkt, um den Rundballen 6 aus der Presskammer 4 auszugeben.

Während das Klappenelement 18 in der Pressstellung angeordnet ist, befindet sich das Überführungsantriebselement 16 in der in Fig. 2 dargestellten Ruhestellung I. Während des Öffnens unmittelbar nach der Öffnung des Klappenelements 18 wird das Überführungsantriebselement um 10° bis 15° aufwärts in eine Aufnahmestützstellung II verschwenkt (Fig. 3) in der es sich zwischen der Starterwalze 72 und der Überführungsstreckenvorrichtung 14 befindet. In der Aufnahmestützstellung II bildet das Überführungsantriebelement 16 einen zweiten Teil 12b der Überführungsstrecke 12 aus.

Nachdem der Rundballen 6 das Überführungsantriebselement 16 in der Aufnahmestützstellung II übertreten hat, wird das Überführungsantriebselement 16 weiter in eine Kontaktaufnahmestellung III (Fig. 4, Erläuterungen s.u.) verschwenkt. Dabei treibt es im dargestellten Verfahren den Rundballen 6 in die Überführungsrichtung U an. Die Kontaktaufnahmestellung III erreicht das Überführungsantriebselement nach einer Verschwenkung aus der Ruhestellung I um etwa 18°. Aus der Kontaktaufnahmestellung III wird das Überführungsantriebselement 16 zum Antreiben des Rundballens 6 weiter in eine erste Antreibestellung IV (Fig. 5) und eine zweite Antreibestellung IV (Fig. 6; ca. 95° aus der Ruhestellung I) verschwenkt, in denen die Überführungsstreckenvorrichtung 14 zwischen dem Überführungsantriebselement 16 und der Aufstandsebene E1 angeordnet ist. Daraufhin ist die Überführung des Rundballens 6 beendet.

Die Fig. 7 und 8 betreffen den unbeabsichtigten Fall, dass ein folgender Rundballen 6 in den Bereich zwischen die Presskammer 4 und das Überführungsantriebselement 16 in der zweiten Antreibestellung IV gelangt. Für diesen Fall ist das Überführungsantriebselement 16 aus der zweiten Antreibestellung IV weiter und aus der Ruhestellung I um fast 180° in die gezeigte Abgabestützstellung V beweglich, in der die Rahmenelemente 42 der Überführungsantriebsvorrichtung 62 einen weiteren Teil 12c der Überführungsstrecke 12 zwischen dem ersten Teil 12a der Überführungsstrecke 12 und der Wickeleinrichtung 8 ausbilden. Dazu ist ein Teilstück 48 der Rahmenelemente 42 länglich in eine Teilstückrichtung T erstreckt, die in der Abgabestützstellung V weniger stark zu der Aufstandsebene E1 angewinkelt ist, als eine auf die Antriebsschwenkachse S1 bezogene und das Teilstück 48 schneidende Radiale R1 (Fig. 8).

Die Überführungseinrichtung 10 umfasst zwei Stelleneinrichtungen 20, die jeweils unter einer der Überführungsstreckenvorrichtungseinheiten 28 angeordnet sind. Die Stelleneinrichtungen 20 umfassen jeweils ein als Hydraulikzylinder ausgebildetes Stellelement 22 und eine Lenkeranordnung zwischen dem Stelleelement 22 und der Überführungsantriebsvorrichtung 62. Die Lenkeranordnung umfasst einen ersten Lenker 24, der schwenkbeweglich am Stellelement 22 und schwenkbeweglich am Maschinenrahmen 60 gelagert ist, und einen zweiten Lenker 26, der schwenkbeweglich am ersten Lenker 24 und schwenkbeweglich an der Überführungsantriebsvorrichtung 62 gelagert ist (Fig. 13).

Die Stelleinrichtungen 20 sind sowohl zur Bewegung der Überführungsantriebsvorrichtung 62 als auch zur Bewegung der Überführungsstreckenvorrichtungseinheiten 28 ausgebildet. Dazu weisen die Stelleinrichtungen 20 Übertragungselemente 30 auf, die zur Bewegung der Überführungsstreckenvorrichtungseinheiten 28 mit davon umfassten Übertragungsgegenelementen 32 zusammenwirken. Die Übertragungsgegenelemente 32 weisen je eine Übertragungskontur 34 auf, die sich aus einem ersten Konturabschnitt 36 und einem zum ersten Konturabschnitt 36 angewinkelten zweiten Konturabschnitt 38 zusammensetzen.

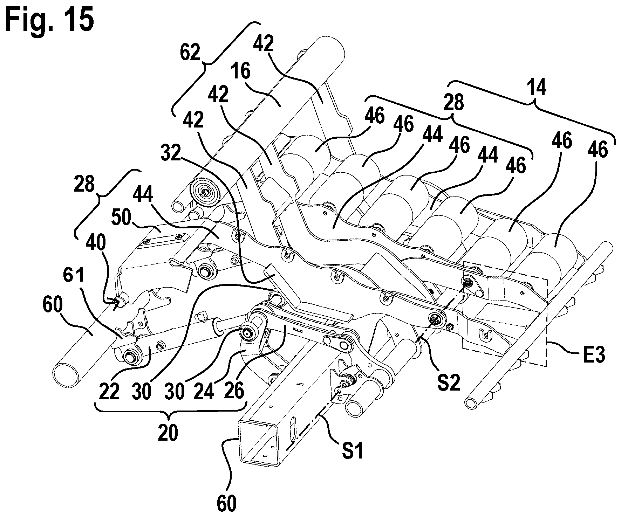

Die Stelleinrichtungen 20 sind derart ausgebildet, dass sich die Übertragungselemente 30 in der Kontaktaufnahmestellung III des Überführungsantriebselementes 16 an die Übertragungsgegenelemente 32 anlegen. Mit einer Aufwärtsverschwenkung des Überführungsantriebselementes 16 aus der Kontaktaufnahmestellung III werden die Überführungsstreckenvorrichtungseinheiten 28 aus der ersten Stellung i (u.a. Fig. 2) in die zweite Stellung ii angehoben (u.a. Fig. 5). Das Übertragungsgegenelement 32 ist derart ausgebildet, dass die Bewegung der Überführungsstreckenvorrichtungseinheiten 28 in der zweiten Stellung ii endet, während das Überführungsantriebselement 16 in die zweite Antreibestellung IV verschwenkt wird. Hierdurch wird ein zu großer Spalt zwischen der Starterwalze 72 und der Überführungsstreckenvorrichtung 14 vermieden. Hierzu dient insbesondere auch das Auffangelement 50 (Fig. 15). Wenn sich das Überführungsantriebselement 16 zwischen der Kontaktaufnahmestellung III und der Ruhestellung I befindet, liegen die Überführungsstreckenvorrichtungseinheiten 28 mit Abstützoberflächen 40 lösbar an einem Abstützelement 61 des Maschinenrahmens 60 an.

Die Überführungsstreckenvorrichtungseinheiten 28 sind spiegelsymmetrisch zu einer Längsmittelebene E3 angeordnet, die in die Überführungsrichtung U und rechtwinklig zur Aufstandsebene E1 angeordnet ist. In der Draufsicht gemäß Fig. 14 ist erkennbar, dass zwei der vier Rahmenelemente 42 der Überführungsantriebsvorrichtung 62 zwischen den Überführungsstreckenvorrichtungseinheiten 28 angeordnet sind. Zwischen diesen beiden Rahmenelementen 42 sind Trittelemente 74 angeordnet.

Die Wickeleinrichtung 8 weist einen Wickeltisch 51 auf, der eine Wickelmulde 50 für den gepressten Rundballen 6 ausbildet (Fig. 9). Ferner umfasst der Wickeltisch 51 einen Wickeltischrahmen 54 und vier im Betrieb relativ zum Wickeltischrahmen 54 umlaufende Rotationselemente 56 (Fig. 14).

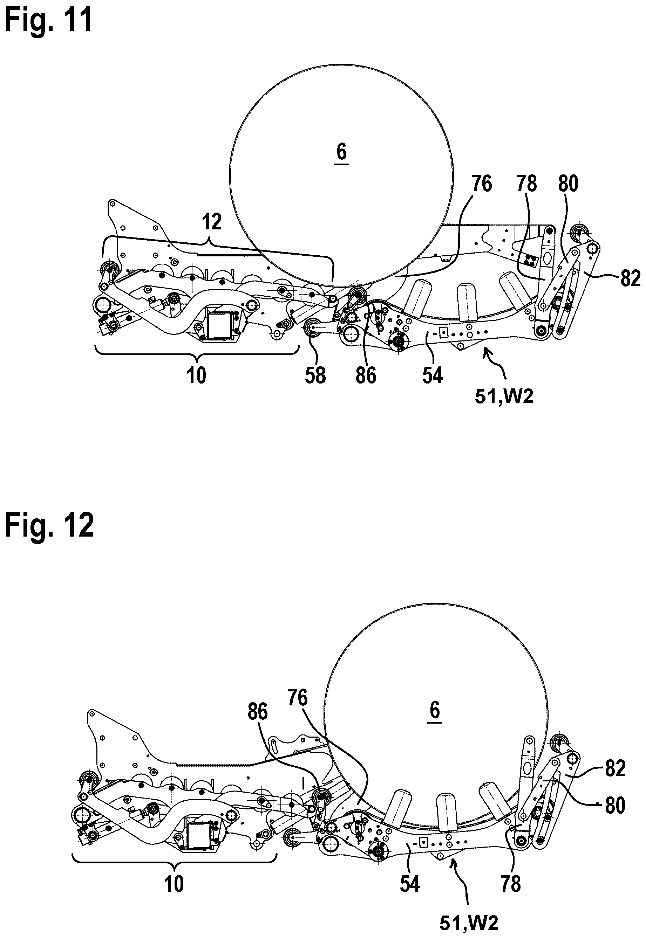

Die Wickeleinrichtung 8 weist darüber hinaus ein Bremsrollenelement 58 auf, dass drehbar um eine zum Wickeltischrahmen 54 ortsfeste Bremsrollenelementdrehachse S3 gelagert ist (Fig. 14). Das Bremsrollenelement 58 ist zumindest in der von Fig. 9 gezeigten Wickelstellung W3 des Wickeltisches 51, die der Ballenbremsstellung W1 gleicht, zwischen der Wickelmulde 52 und der Überführungseinrichtung 10 angeordnet. Das Bremsrollenelement 58 ist derart drehbar um eine Bremsrollendrehachse S3 am Wickeltischrahmen 54 gelagert, dass das Bremsrollenelement 58 in der von Fig. 11 gezeigten Aufnahmestellung W2 des Wickeltisches 51 zwischen der Überführungsstreckenvorrichtung 14 und der Aufsatzebene E1 angeordnet ist.

Zur Überführung des Wickeltisches 51 von der Wickelstellung W3 bzw. Ballenbremsstellung W1 in die Aufnahmestellung W2 und zurück umfasst die Wickeleinrichtung 8 ein Wickeleinrichtungsstellelement 90 sowie einen ersten Wickeltischlenker 76 und einen zweiten Wickeltischlenker 78. Auf der von der Überführungseinrichtung 10 abgewandten Seite ist am Wickeltischrahmen 54 eine Blockiervorrichtung 82 angeordnet, die mittels eines Blockiervorrichtungslenkers 80 mit dem zweiten Wickeltischlenker 78 gekoppelt ist. Die Blockiervorrichtung 82 ist derart gekoppelt, dass sie relativ zum Wickeltischrahmen 54 in einer abgesenkten Stellung angeordnet ist, wenn der Wickeltisch 51 in der Wickelstellung W3 angeordnet ist, und in einer aufgestellten Stellung angeordnet ist, wenn der Wickeltisch 51 in der Aufnahmestellung W2 angeordnet ist. Oberseitig ist an der Blockiervorrichtung 82 ein drehbar gelagertes Blockierrollenelement 84 angeordnet. An der der Überführungseinrichtung 10 zugewandten Seite des Wickeltischrahmens 54 ist ein Sperrrollenelement 86 drehbar an einem Sperrhebel 88 gelagert, der bei der Überführung des Rundballens 6 federbelastet und nachgiebig nach unten verschwenkt und auf ein anschließendes Zurückschwenken hin eine Bewegung des Rundballens 6 entgegen der Überführungsrichtung U verhindern soll.

Gemäß dem von den Fig. 9 bis 12 veranschaulichten Verfahren befindet sich der Wickeltisch 51 bei Öffnung des Klappenelementes 18 in der von der Überführungseinrichtung 10 beabstandeten Ballenbremsstellung W1. Nachdem der Rundballen 6 zum Bremsrollenelement 58 Kontakt aufgenommen hat, wird der Wickeltisch 51 in die Aufnahmestellung W2 bewegt und gerät der Rundballen 6 schwerkraftbedingt auf den Wickeltisch 51. Dabei verhindert die Blockiervorrichtung 82 auch bei einer Aufwärtsfahrt das Herausrollen des Rundballens 6 aus dem Wickeltisch 51. Anschließend wir der Wickeltisch 51 zur Umwicklung des Rundballens 6 in die Wickelstellung W3 verfahren.

## Patentansprüche

1. Verfahren zum Betrieb einer Rundballenpresse (2) für landwirtschaftliches Erntegut, wobei die Rundballenpresse eine Presskammer (4) zum Pressen eines Rundballens (6) ausbildet, eine Wickeleinrichtung (8) zur Umwicklung des gepressten Rundballens (6) mit einem Hüllmaterial aufweist und eine Überführungseinrichtung (10) aufweist, die zur Ausbildung einer Überführungsstrecke (12), über die der gepresste Rundballen (6) in eine Überführungsrichtung (U) von der Presskammer (4) zur Wickeleinrichtung (8) überführbar ist, eingerichtet ist, und zumindest eine Überführungsstreckenvorrichtung (14) umfasst, die zumindest in einer ersten Stellung zumindest einen überwiegenden ersten Teil (12a) der Überführungsstrecke (12) ausbildet, zur Überführung des gepressten Rundballens (6) von der Presskammer (4), die durch ein Klappenelement (18) zur Überführungseinrichtung (10) hin zu öffnen ist, in die Wickeleinrichtung (8), die einen von einer Wickelstellung (W3) in eine Aufnahmestellung (W2) auf die Überführungsstrecke (12) zu beweglichen und eine Wickelmulde (52) für den gepressten Rundballen (6) ausbildenden Wickeltisch (51) aufweist, wobei der Wickeltisch (51) zum Bremsen des gepressten Rundballens (6) in eine Ballenbremsstellung (W1) bewegt und/oder in der Ballenbremsstellung (W1) gehalten wird,
- das Klappenelement (18) die Presskammer (4) zur Ausgabe des gepressten Rundballens (6) aus der Presskammer (4) zur Überführungseinrichtung (10) hin öffnet, und
- der Wickeltisch (51) zur Umwicklung des aufgenommenen Rundballens (6) in die Wickelstellung (W2) bewegt wird,
**dadurch gekennzeichnet, dass**
nach dem Bewegen und/oder Halten des Wickeltisches (51) in der Ballenbremsstellung (W1), die der Wickelstellung (W3) gleicht oder in der der Wickeltisch (51) zwischen der Wickelstellung (W3) und der Aufnahmestellung (W2) angeordnet ist,
- anschließend das Klappenelement (18) die Presskammer (4) zur Ausgabe des gepressten Rundballens (6) aus der Presskammer (4) zur Überführungseinrichtung (10) hin öffnet,
- anschließend der Wickeltisch (51) zur Aufnahme des gepressten Rundballens (6) in die Aufnahmestellung (W2) bewegt wird und
- anschließend der Wickeltisch (51) zur Umwicklung des aufgenommenen Rundballens (6) in die Wickelstellung (W2) bewegt wird.

2. Verfahren nach Anspruch 1, **dadurch gekennzeichnet, dass** die Bewegung des Wickeltisches (51) in die Aufnahmestellung (W2) nach Ablauf einer bestimmten Zeitdauer nach der Öffnung des Klappenelementes (18) erfolgt und/oder in Abhängigkeit von einem Ausgangssignal eines Ballenbremssensors zur Feststellung von einem an der Wickeleinrichtung (8), insbesondere an dem Bremsrollenelement (58), anliegenden Rundballen (6) erfolgt.

3. Verfahren nach Anspruch 1 oder 2, **dadurch gekennzeichnet, dass** die Ballenbremsstellung (W1) in Abhängigkeit von einer Größe des gepressten Rundballens (6) eingestellt wird.

4. Verfahren nach einem der Ansprüche 1 bis 3, **dadurch gekennzeichnet, dass** die Bewegung des Wickeltisches (51), insbesondere die Bestimmung der Zeitdauer oder die Einstellung der Ballenbremsstellung (W1), von einer Neigung der Rundballenpresse (2) abhängig ist.

5. Verfahren zum Betrieb einer Rundballenpresse (2) für landwirtschaftliches Erntegut nach einem der vorhergehenden Ansprüche, wobei die Rundballenpresse eine Presskammer (4) zum Pressen eines Rundballens (6) ausbildet, eine Wickeleinrichtung (8) zur Umwicklung des gepressten Rundballens (6) mit einem Hüllmaterial aufweist und eine Überführungseinrichtung (10) aufweist, die zur Ausbildung einer Überführungsstrecke (12), über die der gepresste Rundballen (6) in eine Überführungsrichtung (U) von der Presskammer (4) zur Wickeleinrichtung (8) überführbar ist, eingerichtet ist, und zumindest eine Überführungsstreckenvorrichtung (14) umfasst, die zumindest in einer ersten Stellung zumindest einen überwiegenden ersten Teil (12a) der Überführungsstrecke (12) ausbildet, wobei die Überführungseinrichtung (10) ein Überführungsantriebselement (16) aufweist, das zum Antreiben des gepressten Rundballens (6) zur Wickeleinrichtung (8) relativ zur Überführungsstreckenvorrichtung (14) zumindest anteilig in die Überführungsrichtung (U) in zumindest eine Antreibestellung (IV) beweglich gelagert ist, in der die Überführungsstreckenvorrichtung (14) zumindest teilweise zwischen dem Überführungsantriebselement (16) und einer Aufstandsebene (E1) der Rundballenpresse (2) angeordnet ist.

6. Verfahren zum Betrieb einer Rundballenpresse nach Anspruch 5, **dadurch gekennzeichnet, dass** das Überführungsantriebselement (16) zumindest in eine Aufnahmestützstellung (II) beweglich gelagert ist, in der das Überführungsantriebselement (16) einen zweiten Teil (12b) der Überführungsstrecke (12) ausbildet.

7. Verfahren zum Betrieb einer Rundballenpresse nach Anspruch 6, **dadurch gekennzeichnet, dass** das Überführungsantriebselement (16) derart gelagert ist, dass der zweite Teil (12b) der Überführungsstrecke (12) zwischen der Presskammer (4) und dem ersten Teil (12a) der Überführungsstrecke (12) angeordnet ist.

8. Verfahren zum Betrieb einer Rundballenpresse nach einem der vorhergehenden Ansprüche, **dadurch gekennzeichnet, dass** das Überführungsantriebselement (16) zumindest anteilig schwenkbeweglich um eine Antriebsschwenkachse (S1) gelagert ist.

9. Verfahren zum Betrieb einer Rundballenpresse nach einem der vorhergehenden Ansprüche, **dadurch gekennzeichnet, dass** das Überführungsantriebselement (16) zumindest in eine Abgabestützstellung (V) beweglich gelagert ist, in der eine das Überführungsantriebselement (16) umfassende und insbesondere mit dem Überführungsantriebselement (16) um die Antriebsschwenkachse (S1) schwenkbeweglich gelagerte Überführungsantriebsvorrichtung (62) einen weiteren Teil (12c) der Überführungsstrecke (12) ausbildet, der zwischen dem ersten Teil (12a) und der Wickeleinrichtung (8) angeordnet ist.

10. Verfahren zum Betrieb einer Rundballenpresse nach einem der vorhergehenden Ansprüche, **dadurch gekennzeichnet, dass** die Überführungseinrichtung (10) zumindest eine Stelleinrichtung (20) mit einem Stellelement (22) zur Bewegung des Überführungsantriebselementes (16) zumindest in die Antreibestellung (IV) aufweist.

11. Verfahren zum Betrieb einer Rundballenpresse nach Anspruch 10, **dadurch gekennzeichnet, dass** die Stelleinrichtung (20) zu einer Verschwenkung des Überführungsantriebselementes (16) um zumindest 15°, bevorzugt um zumindest 120°, besonders bevorzugt um zumindest 160° ausgebildet ist.

12. Verfahren zum Betrieb einer Rundballenpresse nach einem der vorhergehenden Ansprüche 9 bis 11, **dadurch gekennzeichnet, dass** die Stelleinrichtung (20) eine das Stellelement (22) mit dem Überführungsantriebselement (16) koppelnde Lenkeranordnung umfasst, die einen ersten Lenker (24), der schwenkbeweglich am Stellelement (22) und schwenkbeweglich an einem Maschinenrahmen (60) der Rundballenpresse (2) gelagert ist, und einen zweiten Lenker (26) umfasst, der schwenkbeweglich am ersten Lenker (24) und schwenkbeweglich zum Überführungsantriebselement (16) gelagert ist.

13. Verfahren zum Betrieb einer Rundballenpresse nach einem der vorhergehenden Ansprüche, **dadurch gekennzeichnet, dass** die Überführungsstreckenvorrichtung (14) zumindest eine Überführungsstreckenvorrichtungseinheit (28) aufweist, die aus einer ersten Stellung (i), in der die Überführungsstreckenvorrichtungseinheit (28) bei Anordnung der Überführungsstreckenvorrichtung (14) in der ersten Stellung angeordnet ist, relativ zu einem/dem Maschinenrahmen (60) der Rundballenpresse (2) um eine Streckenschwenkachse (S2) in eine zweite Stellung (ii) schwenkbeweglich gelagert ist.

14. Verfahren zum Betrieb einer Rundballenpresse nach Anspruch 13, **dadurch gekennzeichnet, dass** die Überführungsstreckenvorrichtungseinheit (28) eine von der Streckenschwenkachse (S2) beabstandete Abstützoberfläche (40) aufweist, die derart ausgebildet ist, dass die Überführungsstreckenvorrichtungseinheit (28) zumindest in der ersten Stellung (i) mit der Abstützoberfläche (40) an einem Abstützelement (61) des Maschinenrahmens (60) lösbar anliegt.

15. Verfahren zum Betrieb einer Rundballenpresse nach Anspruch 13 oder 14 unter Einschluss von Anspruch 9, **dadurch gekennzeichnet, dass** die Stelleinrichtung (20) zumindest ein Übertragungselement (30) aufweist, mittels dem die Stelleinrichtung (20) zu einer Bewegung der Überführungsstreckenvorrichtungseinheit (28) von der ersten Stellung (i) in eine zweite Stellung (ii) ausgebildet ist.

16. Verfahren zum Betrieb einer Rundballenpresse nach Anspruch 15 unter Einschluss von Anspruch 6, **dadurch gekennzeichnet, dass** die Stelleinrichtung (20) derart ausgebildet ist, dass das Übertragungselement (30) sich während einer Bewegung des Überführungsantriebselementes (16) von der Aufnahmestützstellung (II) in die Antreibestellung (IV) an ein Übertragungsgegenelement (32) der Überführungsstreckenvorrichtungseinheit (28) anlegt.

17. Verfahren zum Betrieb einer Rundballenpresse nach Anspruch 16, **dadurch gekennzeichnet, dass** das Übertragungselement (30) und/oder das Übertragungsgegenelement (32) derart ausgeformt sind/ist, dass die Bewegung der Überführungsstreckenvorrichtungseinheit (28) aus der ersten Stellung (i) in der zweiten Stellung (ii) endet, während das Überführungsantriebselement (16) von der Aufnahmestützstellung (II) in die Antreibestellung (IV) bewegt wird.

18. Verfahren zum Betrieb einer Rundballenpresse nach einem der vorhergehenden Ansprüche 16 oder 17, **dadurch gekennzeichnet, dass** das Übertragungsgegenelement (32) in einem Längsschnitt eine Übertragungskontur (34) aufweist, die einen ersten insbesondere gerade verlaufenden Konturabschnitt (36) und einen zum ersten Konturabschnitt (36) angewinkelten, insbesondere gerade verlaufenden, zweiten Konturabschnitt (38) aufweist.

19. Rundballenpresse nach dem Oberbegriff des Anspruchs 1, **gekennzeichnet durch** eine Steuervorrichtung, die zur automatischen Ausführung des Verfahrens nach einem der Ansprüche 1 bis 18 eingerichtet ist.

## Claims

1. Method for operating a roundbaler (2) for agricultural crops, wherein the roundbaler forms a bale chamber (4) for pressing a round bale (6), has a wrapping device (8) for wrapping the pressed round bale (6) with a wrapping material, and has a transfer device (10) which is configured to form a transfer section (12), via which the pressed round bale (6) can be transferred in a transfer direction (U) from the bale chamber (4) to the wrapping device (8), and comprises at least one transfer section apparatus (14) which forms, at least in a first position, at least a predominant first part (12a) of the transfer section (12), for transferring the pressed round bale (6) from the bale chamber (4), which can be opened by a flap element (18) towards the transfer device (10), into the wrapping device (8) which has a wrapping table (51) which can be moved from a wrapping position (W3) into a receiving position (W2) towards the transfer section (12) and a wrapping trough (52) for the pressed round bale (6), wherein the wrapping table (51) is moved into a bale brake position (W1) and/or held in the bale brake position (W1) in order to brake the pressed round bale (6),
- the flap element (18) opens the bale chamber (4) to deliver the pressed round bale (6) from the bale chamber (4) towards the transfer device (10), and
- the wrapping table (51) is moved into the wrapping position (W2) in order to wrap the received round bale (6),
**characterized in that**,
after moving and/or holding the wrapping table (51) into/in the bale brake position (W1) which is similar to the wrapping position (W3) or in which the wrapping table (51) is positioned between the wrapping position (W3) and the receiving position (W2),
- the flap element (18) subsequently opens the bale chamber (4) to deliver the pressed round bale (6) from the bale chamber (4) towards the transfer device (10),
- the wrapping table (51) is subsequently moved into the receiving position (W2) in order to receive the pressed round bale (6), and
- the wrapping table (51) is subsequently moved into the wrapping position (W2) in order to wrap the received round bale (6).

2. Method according to Claim 1, **characterized in that** that the movement of the wrapping table (51) into the receiving position (W2) takes place after a certain time period has elapsed after the opening of the flap element (18) and/or as a function of an output signal from a bale brake sensor for detecting a round bale (6) present at the wrapping device (8), in particular at the brake roller element (58).

3. Method according to Claim 1 or 2, **characterized in that** the bale brake position (W1) is set as a function of a size of the pressed round bale (6).

4. Method according to any one of Claims 1 to 3, **characterized in that** the movement of the wrapping table (51), in particular the determination of the time period or the setting of the bale brake position (W1), is dependent on an inclination of the roundbaler (2).

5. Method for operating a roundbaler (2) for agricultural crops according to any one of the preceding claims, wherein the roundbaler forms a bale chamber (4) for pressing a round bale (6), has a wrapping device (8) for wrapping the pressed round bale (6) with a wrapping material, and has a transfer device (10) which is configured to form a transfer section (12), via which the pressed round bale (6) can be moved in a transfer direction (U) from the bale chamber (4) to the wrapping device (8), and comprises at least one transfer section apparatus (14) which forms, at least in a first position, at least a predominant first part (12a) of the transfer section (12), wherein the transfer device (10) has a transfer drive element (16) which is mounted movably for driving the pressed round bale (6) to the wrapping device (8) relative to the transfer section apparatus (14) at least proportionally in the transfer direction (U) into at least one drive position (IV), in which the transfer section apparatus (14) is arranged at least partially between the transfer drive element (16) and a contact plane (E1) of the roundbaler (2).

6. Method for operating a roundbaler according to Claim 5, **characterized in that** the transfer drive element (16) is mounted movably at least into a receiving support position (II), in which the transfer drive element (16) forms a second part (12b) of the transfer section (12).

7. Method for operating a roundbaler according to Claim 6, **characterized in that** the transfer drive element (16) is mounted such that the second part (12b) of the transfer section (12) is arranged between the press chamber (4) and the first part (12a) of the transfer section (12).

8. Method for operating a roundbaler according to any one of the preceding claims, **characterized in that** the transfer drive element (16) is mounted at least partially pivotally movable about a drive pivot axis (S1).

9. Method for operating a roundbaler according to any one of the preceding claims, **characterized in that** the transfer drive element (16) is mounted movably at least into a delivery support position (V), in which a transfer drive apparatus (62) comprising the transfer drive element (16) and, in particular, mounted with the transfer drive element (16) pivotably movably around the drive pivot axis (S1) forms a further part (12c) of the transfer section (12), which is arranged between the first part (12a) and the wrapping device (8).

10. Method for operating a roundbaler according to any one of the preceding claims, **characterized in that** the transfer device (10) has at least one actuating device (20) with an actuating element (22) for moving the transfer drive element (16) at least into the drive position (IV).

11. Method for operating a roundbaler according to Claim 10, **characterized in that** the actuating device (20) is designed for pivoting the transfer drive element (16) by at least 15°, preferably by at least 120°, particularly preferably by at least 160°.

12. Method for operating a roundbaler according to any one of the preceding Claims 9 to 11, **characterized in that** that the actuating device (20) comprises a link assembly which couples the actuating element (22) to the transfer drive element (16) and comprises a first link (24), which is mounted pivotably movably on the actuating element (22) and pivotably movably on a machine frame (60) of the roundbaler (2), and a second arm (26), which is mounted pivotably movably on the first arm (24) and pivotably movably with respect to the transfer drive element (16).

13. Method for operating a roundbaler according to any one of the preceding claims, **characterized in that** the transfer section apparatus (14) has at least one transfer section apparatus unit (28) which is mounted pivotably movably around a section pivot axis (S2) out of a first position (i), in which the transfer section apparatus unit (28) is arranged in the first position when the transfer section apparatus (14) is arranged in the first position, into a second position (ii) relative to a/the machine frame (60) of the roundbaler (2).

14. Method for operating a roundbaler according to Claim 13, **characterized in that** the transfer section apparatus unit (28) has a support surface (40) which is spaced apart from the section pivot axis (S2) and is designed such that the transfer section apparatus unit (28) bears, at least in the first position (i), with the support surface (40) releasably against a support element (61) of the machine frame (60).

15. Method for operating a roundbaler according to Claim 13 or 14, including Claim 9, **characterized in that** the actuating device (20) has at least one transmission element (30), by means of which the actuating device (20) is designed for a movement of the transfer section apparatus unit (28) from the first position (i) into a second position (ii).

16. Method for operating a roundbaler according to Claim 15, including Claim 6, **characterized in that** the actuating device (20) is designed such that the transmission element (30) is applied, during a movement of the transfer drive element (16) from the receiving support position (II) into the drive position (IV), to a transmission counter-element (32) of the transfer section apparatus unit (28).

17. Method for operating a roundbaler according to Claim 16, **characterized in that** the transmission element (30) and/or the transmission counter-element (32) are/is formed in such a way that the movement of the transfer section apparatus unit (28) from the first position (i) into the second position (ii) ends, while the transfer drive element (16) is moved from the receiving support position (II) into the drive position (IV).

18. Method for operating a roundbaler according to either of the preceding Claims 16 or 17, **characterized in that** the transmission counter-element (32) has, in a longitudinal section, a transmission contour (34) which has a first, in particular straight, contour section (36) and a second contour section (38) which is angled with respect to the first contour section (36) and is, in particular, straight.

19. Roundbaler according to the precharacterizing clause of Claim 1, **characterized by** a control apparatus which is configured for the automatic performance of the method according to any one of Claims 1 to 18.

## Revendications

1. Procédé de fonctionnement d'une presse (2) à balles rondes pour une récolte agricole, la presse à balles rondes formant une chambre de pressage (4) pour le pressage d'une balle ronde (6), présentant un dispositif d'enveloppement (8) pour l'enveloppement de la balle ronde (6) pressée par un matériau d'enveloppe et présentant un dispositif de transfert (10), qui est conçu pour réaliser une zone de transfert (12) par l'intermédiaire de laquelle la balle ronde (6) pressée peut être transférée dans un sens de transfert (U) depuis la chambre de pressage (4) vers le dispositif d'enveloppement (8), et comprenant au moins un système (14) à zone de transfert, qui forme, au moins dans une première position, au moins une première partie (12a) principale de la zone de transfert (12), pour le transfert de la balle ronde (6) pressée depuis la chambre de pressage (4), qui est ouverte par un élément à clapet (18) vers le dispositif de transfert (10), dans le dispositif d'enveloppement (8), qui présente une table d'enveloppement (51) mobile depuis une position d'enveloppement (W3) vers une position de réception (W2) sur la zone de transfert (12) et formant une auge d'enveloppement (52) pour les balles rondes (6) pressées, la table de d'enveloppement (51) se déplaçant, pour le freinage de la balle ronde (6) pressée, dans une position de freinage (W1) de balle et/ou étant maintenue dans la position de freinage (W1) de balle,
- l'élément à clapet (18) ouvrant la chambre de pressage (4) pour la distribution de la balle ronde (6) pressée depuis la chambre de pressage (4) vers le dispositif de transfert (10) et
- la table d'enveloppement (51) étant déplacée dans la position d'enveloppement (W2) pour l'enveloppement de la balle ronde (6) reçue,
**caractérisé en ce que**
après le déplacement et/ou le maintien de la table d'enveloppement (51) dans la position de freinage (W1) de la balle, qui correspond à la position d'enveloppement (W3) ou dans laquelle la table d'enveloppement (51) est agencée entre la position d'enveloppement (W3) et la position de réception (W2),
- l'élément à clapet (18) ouvre ensuite la chambre de pressage (4) pour la distribution de la balle ronde (6) pressée depuis la chambre de pressage (4) vers le dispositif de transfert (10),
- la table d'enveloppement (51) est ensuite déplacée dans la position de réception (W2) pour la réception de la balle ronde (6) pressée et
- la table d'enveloppement (51) est ensuite déplacée dans la position d'enveloppement (W2) pour l'enveloppement de la balle ronde (6) reçue.

2. Procédé selon la revendication 1, **caractérisé en ce que** le déplacement de la table d'enveloppement (51) dans la position de réception (W2) a lieu après l'expiration d'une durée déterminée après l'ouverture de l'élément à clapet (18) et/ou a lieu en fonction d'un signal de sortie d'un capteur de freinage de balle destiné à constater la présence d'une balle ronde (6) placée contre le dispositif d'enveloppement (8), en particulier contre l'élément à rouleau de freinage (58).

3. Procédé selon la revendication 1 ou 2, **caractérisé en ce que** la position de freinage (W1) de la balle est réglée en fonction d'une dimension de la balle ronde (6) pressée.

4. Procédé selon l'une des revendications 1 à 3, **caractérisé en ce que** le déplacement de la table d'enveloppement (51), en particulier la détermination de la durée ou le réglage de la position de freinage (W1) de la balle, dépend d'une inclinaison de la presse (2) à balles rondes.

5. Procédé de fonctionnement d'une presse (2) à balles rondes pour une récolte agricole selon l'une des revendications précédentes, la presse à balles rondes formant une chambre de pressage (4) pour le pressage d'une balle ronde (6), présentant un dispositif d'enveloppement (8) pour l'enveloppement de la balle ronde (6) pressée par un matériau d'enveloppe et présentant un dispositif de transfert (10), qui est conçu pour réaliser une zone de transfert (12) par l'intermédiaire de laquelle la balle ronde (6) pressée peut être transférée dans un sens de transfert (U) depuis la chambre de pressage (4) vers le dispositif d'enveloppement (8), et comprenant au moins un système à zone de transfert (14), qui forme, au moins dans une première position, au moins une première partie (12a) principale de la zone de transfert (12), le dispositif de transfert (10) présentant un élément d'entraînement de transfert (16) qui est logé mobile, par rapport au système à zone de transfert (14) au moins en partie dans le sens de transfert (U) dans au moins une position d'entraînement (IV), pour l'entraînement de la balle ronde (6) pressée vers le dispositif d'enveloppement (8), dans laquelle position d'entraînement le système à zone de transfert (14) est agencé au moins partiellement entre l'élément d'entraînement de transfert (16) et un plan de contact (E1) de la presse (2) à balles rondes.

6. Procédé de fonctionnement d'une presse à balles rondes selon la revendication 5, **caractérisé en ce que** l'élément d'entraînement de transfert (16) est logé mobile au moins dans une position support de réception (II), dans laquelle l'élément d'entraînement de transfert (16) forme une deuxième partie (12b) de la zone de transfert (12).

7. Procédé de fonctionnement d'une presse à balles rondes selon la revendication 6, **caractérisé en ce que** l'élément d'entraînement de transfert (16) est logé de telle sorte que la deuxième partie (12b) de la zone de transfert (12) est agencée entre la chambre de pressage (4) et la première partie (12a) de la zone de transfert (12).

8. Procédé de fonctionnement d'une presse à balles rondes selon l'une des revendications précédentes, **caractérisé en ce que** l'élément d'entraînement de transfert (16) est logé au moins en partie de manière mobile en pivotement autour d'un axe de pivotement d'entraînement (S1).

9. Procédé de fonctionnement d'une presse à balles rondes selon l'une des revendications précédentes, **caractérisé en ce que** l'élément d'entraînement de transfert (16) est logé mobile au moins dans une position support de distribution (V), dans laquelle un système d'entraînement de transfert (62), comprenant l'élément d'entraînement de transfert (16) et logé en particulier avec l'élément d'entraînement de transfert (16) de manière mobile en pivotement autour de l'axe de pivotement d'entraînement (S1), forme une autre partie (12c) de la zone de transfert (12), qui est agencée entre la première partie (12a) et le dispositif d'enveloppement (8).

10. Procédé de fonctionnement d'une presse à balles rondes selon l'une des revendications précédentes, **caractérisé en ce que** le dispositif de transfert (10) présente au moins un dispositif de réglage (20) pourvu d'un élément de réglage (22) pour le déplacement de l'élément d'entraînement de transfert (16) au moins dans la position d'entraînement (IV).

11. Procédé de fonctionnement d'une presse à balles rondes selon la revendication 10, **caractérisé en ce que** le dispositif de réglage (20) est réalisé pour un pivotement de l'élément d'entraînement de transfert (16) d'au moins 15°, de préférence d'au moins 120°, de manière particulièrement préférée d'au moins 160°.

12. Procédé de fonctionnement d'une presse à balles rondes selon l'une des revendications précédentes 9 à 11, **caractérisé en ce que** le dispositif de réglage (20) comprend un ensemble de direction accouplant l'élément de réglage (22) et l'élément d'entraînement de transfert (16), lequel ensemble comprend une première bielle (24), qui est logée de manière mobile en pivotement sur l'élément de réglage (22) et de manière mobile en pivotement sur un cadre de machine (60) de la presse (2) à balles rondes, et une deuxième bielle (26), qui est logée de manière mobile en pivotement sur la première bielle (24) et de manière mobile en pivotement par rapport à l'élément d'entraînement de transfert (16).

13. Procédé de fonctionnement d'une presse à balles rondes selon l'une des revendications précédentes, **caractérisé en ce que** le système à zone de transfert (14) présente au moins une première unité (28) de système à zone de transfert, qui est logée de manière mobile en pivotement depuis une première position (i), dans laquelle l'unité (28) de système à zone de transfert est agencée lors de l'agencement du système à zone de transfert (14) dans la première position, par rapport à un/au cadre de machine (60) de la presse (2) à balles rondes autour d'un axe de pivotement de zone (S2), dans une deuxième position (ii).

14. Procédé de fonctionnement d'une presse à balles rondes selon la revendication 13, **caractérisé en ce que** l'unité (28) de système à zone de transfert présente une surface d'appui (40) à une certaine distance de l'axe de pivotement de zone (S2), laquelle surface est conçue de telle sorte que l'unité (28) de système à zone de transfert se place de manière amovible, au moins dans la première position (i), avec la surface d'appui (40) sur un élément d'appui (61) du cadre de machine (60).

15. Procédé de fonctionnement d'une presse à balles rondes selon la revendication 13 ou 14, en incluant la revendication 9, **caractérisé en ce que** le dispositif de réglage (20) présente au moins un élément de transfert (30) au moyen duquel le dispositif de réglage (20) est conçu pour un déplacement de l'unité (28) de système à zone de transfert depuis la première position (i) dans une deuxième position (ii).

16. Procédé de fonctionnement d'une presse à balles rondes selon la revendication 15, en incluant la revendication 6, **caractérisé en ce que** le dispositif de réglage (20) est conçu de telle sorte que l'élément de transfert (30) se place, lors d'un déplacement de l'élément d'entraînement de transfert (16) depuis la position support de réception (II) dans la position d'entraînement (IV), contre un contre-élément de transfert (32) de l'unité (28) de système à zone de transfert.

17. Procédé de fonctionnement d'une presse à balles rondes selon la revendication 16, **caractérisé en ce que** l'élément de transfert (30) et/ou le contre-élément de transfert (32) est/sont formé(s) de telle sorte que le déplacement de l'unité (28) de système à zone de transfert depuis la première position (i) se termine dans la deuxième position (ii) pendant que l'élément d'entraînement de transfert (16) est déplacé depuis la position support de réception (II) dans la position d'entraînement (IV).

18. Procédé de fonctionnement d'une presse à balles rondes selon l'une des revendications précédentes 16 ou 17, **caractérisé en ce que** le contre-élément de transfert (32) présente, en coupe longitudinale, un contour de transfert (34) qui présente une première section de contour (36), s'étendant en particulier en ligne droite, et une deuxième section de contour (38) formant un angle par rapport à la première section de contour (36) et s'étendant en particulier en ligne droite.

19. Presse à balles rondes selon le préambule de la revendication 1, **caractérisé par** un système de commande qui est configuré pour la mise en œuvre automatique du procédé selon l'une des revendications 1 à 18.
